(19) Europäisches Patentamt
European Patent Office
Office européen des brevets

(11) **EP 1 795 372 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(51) Int Cl.:
***B60C 11/03*** *(2006.01)* ***B60C 11/12*** *(2006.01)*

(21) Anmeldenummer: 06122407.7

(22) Anmeldetag: **17.10.2006**

(54) **Laufstreifenprofil**

Tire tread profile

Bande de roulement pour pneumatique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.12.2005 DE 102005058363**

(43) Veröffentlichungstag der Anmeldung:
**13.06.2007 Patentblatt 2007/24**

(73) Patentinhaber: **Continental Reifen Deutschland GmbH**
**30165 Hannover (DE)**

(72) Erfinder:
• **Vennebörger, Martin**
**30625, Hannover (DE)**
• **Schlittenhard, Jan**
**30900, Wedemark (DE)**

(74) Vertreter: **Finger, Karsten et al**
**Continental Aktiengesellschaft**
**Patente und Lizenzen**
**Postfach 1 69**
**30001 Hannover (DE)**

(56) Entgegenhaltungen:
**EP-A- 0 456 949 EP-A- 0 669 216**
**EP-A- 1 459 908**

**Beschreibung**

Die Erfindung betrifft ein Laufstreifenprofil - insbesondere Winterlaufstreifenprofil - eines Fahrzeugluftreifens mit mehreren axial zu einander benachbarten, über den gesamten Umfang des Fahrzeugluftreifens erstreckten Profilblockreihen , wobei jede der Profilblockreihen aus mehreren über den Umfang des Fahrzeugluftreifens verteilten in Umfangsrichtung hintereinander und jeweils durch Querrillen von einander beabstandeten Profilblockelementen ausgebildet ist, wobei die beiden axial äußeren, jeweils eine Schulterprofilblockreihe bildenden Profilblockreihen mit einer größeren durchschnittlichen Umfangssteifigkeit als die axial inneren, zwischen den beiden äußeren Profilblockreihen angeordneten Profilblockreihen.

Ein solches gattungsgemäßes Reifenprofil ist beispielsweise aus der EP-A-0 456 949 bekannt.

Bei derartigen Laufstreifenprofilen ergibt sich üblicherweise eine sehr unterschiedliche, ungleichmäßige axiale Abriebsverteilung, die mit unterschiedlichsten Maßnahmen im Unterbau, im Gürtel, in den Kautschukmischungen oder in der Ausbildung der Profilelementform am Fahrzeugluftreifen in ihren Auswirkungen zu reduzieren versucht wird. Dabei werden üblicherweise die einzelnen sich zum Teil widersprechenden Maßnahmen solange variiert, bis ein einigermaßen hinsichtlich der Gleichmäßigkeit des Abriebs zufrieden stellendes Abriebbild erreicht ist. Dies geht üblicherweise zu Lasten anderer ebenfalls gewünschter Eigenschaften des Fahrzeugreifens.

Der Erfindung liegt die Aufgabe zugrunde, einen Fahrzeugluftreifen mit einem - insbesondere Winterlaufstreifenprofil - mit mehreren axial zu einander benachbarten, über den gesamten Umfang des Fahrzeugluftreifens erstreckten Profilblockreihen , wobei jede der Profilblockreihen aus mehreren über den Umfang des Fahrzeugluftreifens verteilten in Umfangsrichtung hintereinander und jeweils durch Querrillen von einander beabstandeten Profilblockelementen ausgebildet ist, zu ermöglichen, bei dem in einfacher Weise ein vergleichmäßigtes Abriebbild ermöglicht wird.

Erfindungsgemäß wird die Aufgabe durch die Ausbildung eines Laufstreifenprofil - insbesondere Winterlaufstreifenprofil - eines Fahrzeugluftreifens mit mehreren axial zu einander benachbarten, über den gesamten Umfang des Fahrzeugluftreifens erstreckten Profilblockreihen , wobei jede der Profilblockreihen aus mehreren über den Umfang des Fahrzeugluftreifens verteilten in Umfangsrichtung hintereinander und jeweils durch Querrillen von einander beabstandeten Profilblockelementen ausgebildet ist, gemäß den Merkmalen von Anspruch 1 gelöst, bei dem die beiden axial äußeren, jeweils eine Schulterprofilblockreihe bildenden Profilblockreihen mit einer größeren durchschnittlichen Umfangssteifigkeit als die axial inneren, zwischen den beiden äußeren Profilblockreihen angeordneten Profilblockreihen ausgebildet sind.

Hierdurch wird ermöglicht, dass beim Abrollen, die besonders abriebempfindlichen Profilblockelemente der mittleren Profilblockreihen beim Ein- und Auslauf in den Latsch durch die reduzierte Umfangssteifigkeit durch ausweichende Biegebewegung geringeren Abriebsbelastungen ausgesetzt sind, während die weniger abriebempfindlichen Profilblockelemente der äußeren Profilblockreihen durch die erhöhte Umfangssteifigkeit beim Ein- und Auslauf in den Latsch in ihren Ausweichbewegungen stärker beschränkt sind und hierdurch erhöhten Abriebbelastungen ausgesetzt sind. Auf diese Weise kann über die axiale Erstreckung des Laufstreifenprofils eine Vergleichmäßigung des Abriebbildes erzielt werden. Hierdurch kann sehr gezielt bereits bei der ersten Auslegung eines Fahrzeugluftreifens ein hohes Maß an Gleichmäßigkeit des Abriebbildes voreingestellt werden.

Besonders vorteilhaft ist die Ausbildung eines Laufstreifenprofils gemäß den Merkmalen von Anspruch 2, wobei die benachbarten Profilblockreihen jeweils durch über den gesamten Umfang des Fahrzeugluftreifens erstreckte Rillen von einander beabstandet sind. Bei der Abplattung des Reifens während des Latschdurchlaufs treten auch Schubspannungen auf, die zu Schlupfbewegungen führen, die quer zur Rollrichtung des Reifens verlaufen. Diese überlagern sich mit den Schlupfbewegungen in Umfangsrichtung, wodurch das Reifenabriebsbild beeinflusst wird. Durch die Trennung der Profilblockreihen durch Rillen, wird eine Entkoppelung der Profilblockreihen in axialer Richtung herbeigeführt, wodurch das Abriebsbild positiv beeinflusst wird.

Besonders vorteilhaft ist die Ausbildung eines Laufstreifenprofils gemäß den Merkmalen von Anspruch 3, wobei die benachbarten Profilblockreihen jeweils durch über den gesamten Umfang des Fahrzeugluftreifens erstreckte Umfangsrillen von einander axial beabstandet sind. Durch die Verwendung von Umfangsrillen lässt sich nicht nur eine Entkoppelung der Profilblockreihen in axialer Richtung herbeiführen, sondern auch die Aquaplaningeigenschaften des Reifens verbessern.

Besonders vorteilhaft ist die Ausbildung eines Laufstreifenprofils gemäß den Merkmalen von Anspruch 4 mit einer mittleren zentralen Profilblockreihe, durch die sich die Äquatorebene des Fahrzeugluftreifens erstreckt, wobei diese Profilblockreihe die kleinste durchschnittliche Umfangssteifigkeit der Profilblockreihen des Fahrzeugluftreifens aufweist. Mit dieser Anordnung der Profilsteifigkeiten lässt sich das Reifenverschleißverhalten besonders positiv beeinflussen, da die aus der Durchmesseränderung des Reifens bei der Abplattung entstehenden Zwangsverformungen in der Äquatorialebene des Reifen besonders groß sind. Wird dies Phänomen bei der Profilauslegung mit einer besonders geringen Umfangssteifigkeit in der Äquatorialebene begegnet, dann lässt sich der Abrieb minimieren.

Besonders vorteilhaft ist die Ausbildung eines Laufstreifenprofils gemäß den Merkmalen von Anspruch 5, wobei von den Reifenschultern zur Äquatorialebene hin die durchschnittliche Umfangssteifigkeit von Profilblockreihe zu Profilblockreihe abnimmt. Bei jedem Durchlauf des Latsches treten Zwangsverformungen im Profil auf, die auf Durchmesseränderungen des Reifens bei der Abplattung basieren. Diese Zwangsverformungen sind die der Reifenschulter gering und nehmen zur Äquatorialebene hin zu. Um den Abrieb zu minimieren, ist es günstig den immer größer werdenden Zwangsbewegungen in Richtung der Äquatorialebene mit einer immer größer werdenden Beweglichkeit der Profilblockreihen und damit einer sinkenden Umfangssteifigkeit zu begegnen.

Besonders vorteilhaft ist die Ausbildung eines Laufstreifenprofils gemäß den Merkmalen von Anspruch 6, das insbesondere symmetrischen ausgebildet ist, das mit fünf benachbarten in Umfangsrichtung über den Fahrzeugluftreifen erstreckten Profilblockreihen ausgebildet ist, mit einer ersten Profilblockreihe im axialen Erstreckungsbereich der am Fahrzeug vom Fahrzeug wegweisenden Außenschulter, mit einer zu der ersten Profilblockreihe zur zum Fahrzeug hinweisenden Innenschulter hin axial benachbarten zweiten Profilblockreihe, mit einer zu der zweiten Profilblockreihe zur zum Fahrzeug hinweisenden Innenschulter hin axial benachbarten dritten Profilblockreihe, mit einer zu der dritten Profilblockreihe zur zum Fahrzeug hinweisenden Innenschulter hin axial benachbarten vierten Profilblockreihe und mit einer zu der vierten Profilblockreihe zur zum Fahrzeug hinweisenden Innenschulter hin axial benachbarten im axialen Erstreckungsbereich der am Fahrzeug vom Fahrzeug Innenschulter ausgebildeten fünften Profilblockreihe, wobei die zweite Profilblockreihe mit einer durchschnittlichen Umfangssteifigkeit ausgebildet ist, die das 0,7- bis 0,8-fache der durchschnittlichen Umfangssteifigkeit der ersten Profilblockreihe beträgt, wobei die dritte Profilblockreihe mit einer durchschnittlichen Umfangssteifigkeit ausgebildet ist, die das 0,6- bis 0,7-fache der durchschnittlichen Umfangssteifigkeit der ersten Profilblockreihe beträgt,
wobei die vierte Profilblockreihe mit einer durchschnittlichen Umfangssteifigkeit ausgebildet ist, die das 0,7- bis 0,8-fache der durchschnittlichen Umfangssteifigkeit der ersten Profilblockreihe beträgt und wobei die fünfte Profilblockreihe mit einer durchschnittlichen Umfangssteifigkeit ausgebildet ist, die das 0,9- bis 1,0-fache der durchschnittlichen Umfangssteifigkeit der ersten Profilblockreihe beträgt. Durch diese Staffelung der Umfangssteifigkeiten lassen sich den durch die Zwangsverformungen auftretenden Schlupfbewegungen entgegen wirken und somit das Abriebsverhalten positiv beeinflussen.

Besonders vorteilhaft ist die Ausbildung eines Laufstreifenprofils gemäß den Merkmalen von Anspruch 7, mit einer axialen Erstreckung a der ersten Profilblockreihe innerhalb der axialen Erstreckung TW der Reifenaufstandsfläche, mit einer axialen Erstreckung b des zweiten Profilblockreihe, mit einer axialen Erstreckung c des dritten Profilblockreihe, mit einer axialen Erstreckung d des vierten Profilblockreihe und mit einer axialen Erstreckung e der fünften Profilblockreihe innerhalb der axialen Erstreckung TW der Reifenaufstandsfläche, wobei das Maß der axialen Erstreckungen a, b, c, d und e gilt:

$$0,22*TW \leq a \leq 0,25*TW, \quad 0,11*TW \leq b \leq 0,15*TW, \quad 0,1*TW \leq c \leq 0,14*TW,$$

$$0,11*TW \leq d \leq 0,15*TW, \quad 0,22*TW \leq e \leq 0,25*TW$$

Diese Auslegung ist besonders vorteilhaft für symmetrische Profile, weil sie eine relative gleichmäßige Auslegung der Quersteifigkeit ermöglicht. Die Schulterbereiche werden besonders quersteif ausgelegt, um den hohen Kräften, die durch die dynamische axiale Kraftverlagerung beim Handling auftreten, entgegen zu wirken. Diese Querkräfte nehmen zur Äquatorialebene hin ab, was sich in einer abnehmenden Quersteifigkeit, durch eine benehmende Profilblockbreite, ausdrückt.

Besonders vorteilhaft ist die Ausbildung eines Laufstreifenprofils gemäß den Merkmalen von Anspruch 8, das asymmetrisch ausgebildet ist, das mit fünf benachbarten in Umfangsrichtung über den Fahrzeugluftreifen erstreckten Profilblockreihen ausgebildet ist, mit einer ersten Profilblockreihe im axialen Erstreckungsbereich der am Fahrzeug vom Fahrzeug wegweisenden Außenschulter, mit einer zu der ersten Profilblockreihe zur zum Fahrzeug hinweisenden Innenschulter hin axial benachbarten zweiten Profilblockreihe, mit einer zu der zweiten Profilblockreihe zur zum Fahrzeug hinweisenden Innenschulter hin axial benachbarten dritten Profilblockreihe, mit einer zu der dritten Profilblockreihe zur zum Fahrzeug hinweisenden Innenschulter hin axial benachbarten vierten Profilblockreihe und mit einer zu der vierten Profilblockreihe zur zum Fahrzeug hinweisenden Innenschulter hin axial benachbarten im axialen Erstreckungsbereich der am Fahrzeug vom Fahrzeug Innenschulter ausgebildeten fünften Profilblockreihe,
wobei die zweite Profilblockreihe mit einer durchschnittlichen Umfangssteifigkeit ausgebildet ist, die das 0,7- bis 0,8-fache der durchschnittlichen Umfangssteifigkeit der ersten Profilblockreihe beträgt, wobei die dritte Profilblockreihe mit einer durchschnittlichen Umfangssteifigkeit ausgebildet ist, die das 0,6- bis 0,7-fache der durchschnittlichen Umfangssteifigkeit der ersten Profilblockreihe beträgt,
wobei die vierte Profilblockreihe mit einer durchschnittlichen Umfangssteifigkeit ausgebildet ist, die das 0,65- bis 0,75-fache der durchschnittlichen Umfangssteifigkeit der ersten Profilblockreihe beträgt und wobei die fünfte Profilblockreihe mit einer durchschnittlichen Umfangssteifigkeit ausgebildet ist, die das 0,85- bis 0,95-fache der durchschnittlichen Umfangssteifigkeit der ersten Profilblockreihe beträgt. Durch diese Staffelung der Umfangssteifigkeiten lassen sich den durch die Zwangsverformungen auftretenden Schlupfbewegungen entgegen wirken und somit das Abriebsverhalten positiv beeinflussen. In diesem Zusammenhang ist zu erwähnen, dass bei der Auslegung der Umfangssteifigkeit bei asymmetrischen Reifen, die bei den meisten Fahrzeugen durch den negativen Sturz auftretenden besonderen Belastungen der Innenschulter berücksichtigt werden können. Wobei eine umfangsweichere Auslegung Innenschulter und der sich zur Äquatorialebene hin erstreckenden Profilblockreihen das Abriebsverhalten nochmals verbessert.

Besonders vorteilhaft ist die Ausbildung eines Laufstreifenprofils gemäß den Merkmalen von Anspruch 9, mit einer axialen Erstreckung a der ersten Profilblockreihe innerhalb der axialen Erstreckung TW der Reifenaufstandsfläche, mit einer axialen Erstreckung b des zweiten Profilblockreihe, mit einer axialen Erstreckung c des dritten Profilblockreihe, mit einer axialen Erstreckung d des vierten Profilblockreihe und

mit einer axialen Erstreckung e der fünften Profilblockreihe innerhalb der axialen Erstreckung TW der Reifenaufstandsfläche, wobei das Maß der axialen Erstreckungen a, b, c, d und e gilt: 0,22*TW ≤ a ≤ 0,25 *TW, 0,11 *TW ≤ b ≤ 0,15*TW, 0,1*TW ≤ c ≤ 0,14*TW, 0,11*TW ≤ d ≤ 0,15*TW, 0,18*TW ≤ e ≤ 0,25*TW

Diese Auslegung ist besonders vorteilhaft für asymmetrische Profile, weil sie eine "maßgeschneiderte" Auslegung der Quersteifigkeit ermöglicht. Die Schulterbereiche werden besonders quersteif ausgelegt, um den hohen Kräften, die durch die dynamische axiale Kraftverlagerung beim Handling auftreten, entgegen zu wirken. Dabei wird die Außenschulter besonders betont. Diese Querkräfte nehmen zur Innenschulter hin ab, was sich in einer abnehmenden Quersteifigkeit, durch eine benehmende Profilblockbreite, ausdrückt, dabei sollten aber auch Einflüsse, die aus Block- und Lamellenwinkeln resultieren, berücksichtigt werden.

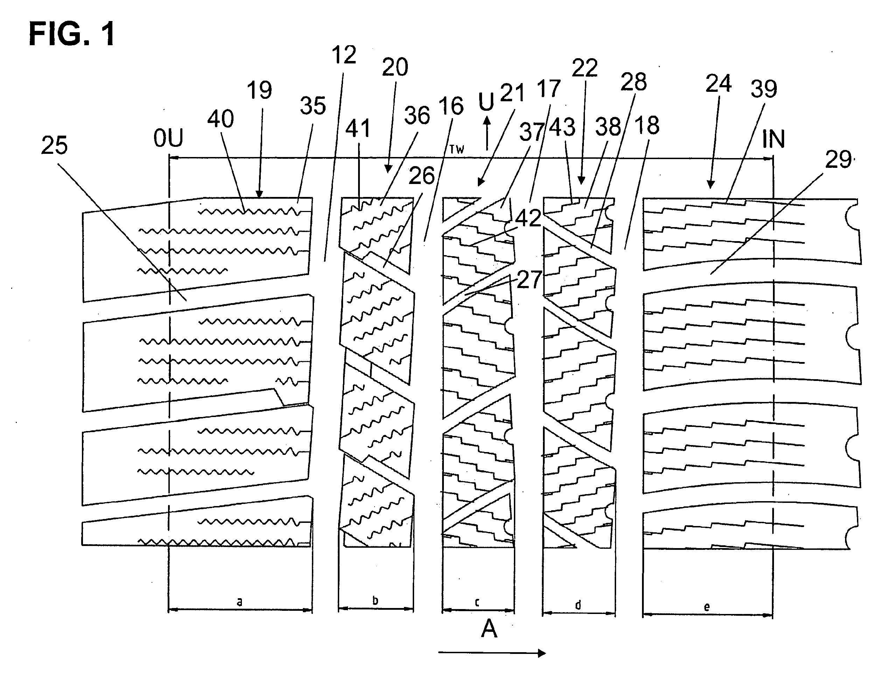

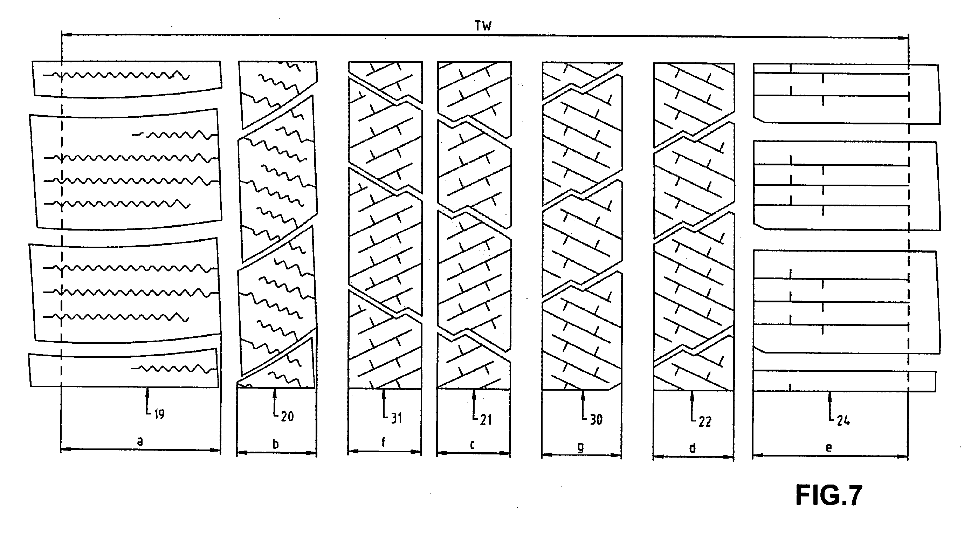

Die Erfindung wird im Folgenden an Hand der in den Figuren 1 und 7 dargestellten Ausführungsbeispiele näher erläutert. Hierin zeigen

Fig. 1 Laufstreifenprofil eines Fahrzeugluftreifens,
Fig. 2 Querschnittsdarstellung des Fahrzeugluftreifens von Fig. 1 in einer die Drehachse des Fahrzeugluftreifens beinhaltenden Schnittebene gemäß Schnitt II-II von Figur 1
Fig.3a Profilblockelement des Laufstreifenprofils von Fig. 1 in vergrößerter Darstellung zur Erläuterung des sinusförmigen Feineinschnitts mit progressiv zunehmender Amplitude bei geschlossenem Feineinschnitt,
Fig.3b ausschnittsweises Profilblockelement von Fig. 3 zur Erläuterung des sinusförmigen Feineinschnitts mit progressiv zunehmender Amplitude bei geöffnetem Feineinschnitt. in weiter vergrößerter Darstellung,
Fig. 4 alternatives Laufflächenprofil mit drei Profilblockreihen,
Fig. 5 alternatives Laufflächenprofil mit vier Profilblockreihen,
Fig. 6 alternatives Laufflächenprofil mit sechs Profilblockreihen,
Fig. 7 alternatives Laufflächenprofil mit sieben Profilblockreihen,

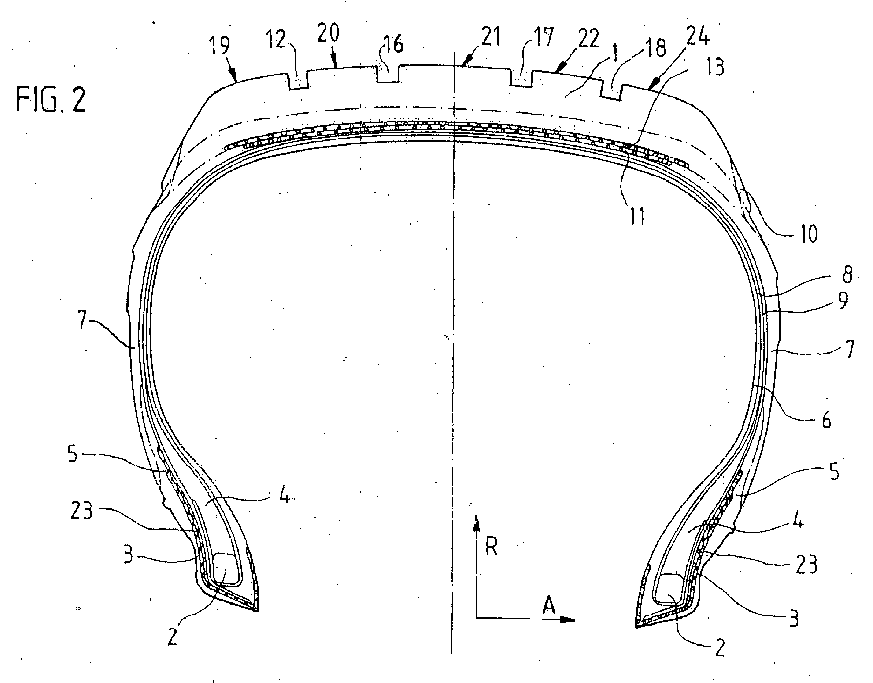

In Fig. 1 und Fig. 2 ist der Aufbau eines Fahrzeugluftreifens beispielhaft dargestellt, bei dem um einen Kern 2 mit Kernprofil 4 eine erste Karkassenlage 8 bekannter Art außerhalb einer luftundurchlässigen Innenschicht 6 über den rechten Schulterbereich und die Zenitebene zu dem linken Schulterbereich und den linken Kern 2 mit Kernprofil 4 reicht, um den sie in herkömmlicher Weise gelegt ist. Über der ersten Karkassenlage 8 ist in herkömmlicher Weise eine zweite Karkassenlage 9 bekannter Art gelegt, die sich ebenfalls von der in Fig. 1 rechts dargestellten Seite des Reifens bis zur links dargestellten Seite erstreckt. In herkömmlicher Weise ist im Kernbereich jeweils über einen Wulststreifen 23 und den Wulstverstärker 3 ein Holmprofil 5 und von diesem ausgehend bis in den Schulterbereich reichend ein Seitenwandstreifen 7 aufgelegt. Über den Umfang des Reifens reichen außerhalb der Karkassenlagen 7 und 8 radialer Bauart angeordnet mehrere Stahlgürtellagen 11 und 13 bekannter Art mit in Kautschuk eingebetteten Stahlkorden. Im Schulterstreifen sind in bekannter Weise zusätzlich Schulterstreifen 10 aufgelegt. Den Abschluss des Reifenaufbaus bildet in bekannter Weise ein profilierter Laufstreifen 1.

In den Figuren 1 und 2 ist die axiale Richtung A des Fahrzeugluftreifens mit Pfeildarstellung eingetragen. Die radiale Richtung R des Fahrzeugluftreifens ist ebenfalls mit Pfeildarstellung angegeben, wobei die Pfeilrichtung von radial innen nach radial außen weist. Ebenso ist die Umfangsrichtung U des Fahrzeugluftreifens mit Pfeildarstellung angegeben. Ebenso ist in Fig. 1 die Aufstandsbreite TW eingezeichnet, die der Fahrzeugluftreifen im montierten, belasteten Betriebszustand unter Normbedingungen nach E.T.R.T.O-Standards aufweist

In den Figuren 1 und 2 ist zu erkennen, dass der Laufstreifen 1 mit einem asymmetrischen Winterreifenprofil ausgebildet ist, welches in axialer Richtung A ausgehend von der linken zur Fahrzeugaußenseite OU weisenden Reifenschulter bis zur rechten zur Fahrzeuginnenseite IN weisenden Reifenschulter hintereinander angeordnet mit einer in Umfangsrichtung U ausgerichteten Profilblockreihe 19, die in den linken Schulterbereich OU reicht, mit einer in Umfangsrichtung U ausgerichteten Profilblockreihe 20, mit einer zentralen in Umfangsrichtung U ausgerichteten Profilblockreihe 21, mit einer in Umfangsrichtung U ausgerichteten Profilblockreihe 22 und mit einer in Umfangsrichtung U ausgerichteten Profilblockreihe 24, die in den rechten Schulterbereich IN reicht, ausgebildet ist. Die Profilblockreihe 19 ist aus einer Vielzahl von in Umfangsrichtung U des Reifens hintereinander angeordneten Profilblockelementen 35 bekannter Art ausgebildet, die jeweils durch eine Querrille 25 bekannter Art voneinander getrennt sind. Die Profilblockreihe 20 ist aus einer Vielzahl von in Umfangsrichtung U des Reifens hintereinander angeordneten Profilblockelementen 36 bekannter Art ausgebildet, die jeweils voneinander durch eine Querrille 26 bekannter Art getrennt sind. Die Profilblockreihe 21 ist aus einer Vielzahl von in Umfangsrichtung U hintereinander angeordneten Profilblockelementen 37 bekannter Art ausgebildet, die jeweils voneinander durch eine Querrille 27 bekannter Art getrennt sind. Die Profilblockreihe 22 ist von einer Vielzahl von in Umfangsrichtung U hintereinander angeordneten Profilblockelementen 38 bekannter Art ausgebildet, die jeweils voneinander durch eine Querrille 28 bekannter Art getrennt sind. Die Profilblockreihe 24 ist aus einer Vielzahl von in Umfangsrichtung U hintereinander angeordneten Profilblockelementen 39 bekannter Art ausgebildet, die jeweils durch eine Querrille 29 bekannter Art voneinander getrennt sind.

Die Profilblockreihen 19 und 20 sind in axialer Richtung A des Fahrzeugluftreifens durch eine in Umfangsrichtung U verlaufende Umfangsrille 12 bekannter Art, die sich über den gesamten Umfang des Reifens erstreckt, voneinander getrennt. Die Profilblockreihen 20 und 21 sind in axialer Richtung durch eine in Umfangsrichtung U verlaufende Umfangsrille 16 bekannter Art, die sich über den gesamten Umfang des Reifens erstreckt, voneinander getrennt. Die Profilblockreihen 21 und 22 sind in axialer Richtung A des Reifens durch eine in Umfangsrichtung U des Reifens verlaufende und über den gesamten Umfang des Reifens erstreckte Umfangsrille 17 bekannter Art voneinander getrennt. Die Profilblockreihe 22 und die Profilblockreihe 24 sind in axialer Richtung A durch eine in Umfangsrichtung U des Reifens verlaufende und über den gesamten Umfang des Reifens erstreckte Umfangsrille 18 bekannter Art von einander getrennt.

In den Profilblockelementen 35 der Schulterprofilblockreihe 19 sind parallel zu einander erstreckt Querrillen 25 sinusförmig gewellte Feineinschnitte 40 ausgebildet. In den Profilblockelementen 36 der Profilblockreihe 20 sind parallel zu einander erstreckt sinusförmig gewellte Feineinschnitte 41 ausgebildet. In den Profilblockelementen 37 der Profilblockreihe 21 sind parallel zu einander erstreckte stufenförmig verlaufende Feineinschnitte 42 ausgebildet, die sich über die gesamte axiale Erstreckung der Profilblockelemente 37 erstrecken. In den Profilblockelementen 38 der Profilblockreihe 22 sind in den Profilblockelementen 38 parallel zu einander erstreckte stufenförmig verlaufende Feineinschnitte 43 ausgebildet, die sich über die gesamte axiale Erstreckung der Profilblockelemente 38 erstrecken. In den Profilblockelementen 39 der Schulterprofilblockreihe 24 sind parallel zu den Querrillen 29 erstreckte stufenförmig verlaufende Feineinschnitte 44 ausgebildet, die sich über die gesamte axiale Erstreckung der Profilblockelemente 39 innerhalb der Aufstandsbreite TW des Fahrzeugluftreifens erstrecken.

Die Profilblockreihe 19 erstreckt sich in axialer Richtung - zwischen dem zur Fahzeugaußenseite OU weisenden Rand der Aufstandsbreite TW und der Umfangsrille 12 über eine maximale Breite a. Die Profilblockreihe 20 erstreckt sich in axialer Richtung - zwischen der Umfangsrille 12 und der Umfangsrille 16 über eine maximale Breite b. Die Profilblockreihe 21 erstreckt sich in axialer Richtung - zwischen der Umfangsrille 16 und der Umfangsrille 17 über eine maximale Breite c. Die Profilblockreihe 22 erstreckt sich in axialer Richtung - zwischen der Umfangsrille 17 und der Umfangsrille 18 über eine maximale Breite d. Die Profilblockreihe 24 erstreckt sich in axialer Richtung - zwischen dem zur Fahzeuginnenseite IN weisenden Rand der Aufstandsbreite TW und der Umfangsrille 18 über eine maximale Breite e.

Für die Breiten a, b, c, d und e gelten folgende Verhältnisse:

$$0,22*TW \leq a \leq 0,25*TW, \ \ 0,11*TW \leq b \leq 0,15*TW, 0,1*TW \leq c \leq 0,14*TW,$$

$$0,11*TW \leq d \leq 0,15*TW, 0,18*TW \leq e \leq 0,25*TW.$$

Bei einer weiteren nicht dargestellten Ausführung mit symmetrischem Laufflächenprofil mit fünf Profilblockreihen ist ein Breitenverhältnis sinnvoll, bei dem die Breiten a, b, c, d und e folgende Verhältnisse aufweisen:

$$0,22*TW \leq a \leq 0,25*TW, \ \ 0,11*TW \leq b \leq 0,15*TW, 0,1*TW \leq c \leq 0,14*TW,$$

$$0,11*TW \leq d \leq 0,15*TW, 0,22*TW \leq e \leq 0,25*TW.$$

Die Profilblockreihe 19 ist mit einer ersten durchschnittlichen Umfangssteifigkeit W1 ausgebildet. Die Profilblockreihe 20 ist mit einer durchschnittlichen Umfangssteifigkeit W2 ausgebildet. Die Profilblockreihe W3 ist mit einer durchschnittlichen Umfangssteifigkeit W3 ausgebildet. Die Profilblockreihe 22 ist mit einer durchschnittlichen Umfangssteifigkeit W4 ausgebildet. Die Profilblockreihe 24 ist mit einer durchschnittlichen Umfangssteifigkeit W5 ausgebildet.

Für die Umfangssteifigkeiten W1, W2, W3, W4 und W5 gilt:

$$W1 > W2 > W3 < W4 < W5.$$

Bei einem asymmetrischen Laufstreifenprofil gilt:

$$(0,7 *W1) \le W2 \le (0,8 *W1),$$

$$(0,6 *W1) \le W3 \le (0,7 *W1),$$

$$(0,65 *W1) \le W4 \le (0,75 *W1)$$

und

$$(0,85 *W1) \le W5 \le (0,95 *W1).$$

Beispielsweise sind die Umfangssteifigkeiten wie folgt gewählt: W2 = 0,75W1, W3=0,65W1, W4=0,7W1, W5=0,9W1.

Die Umfangssteifigkeiten werden durch Formgebung der Profilblockelemente, die Ausbildung der Querrillen und Feineinschnitt sowie durch die Wahl der für die Profilblockreihe beabsichtigten Gummimischung in bekannter Weise gezielt eingestellt.

Ein Weg zur Bestimmung der durchschnittlichen Umfangssteifigkeiten der Profilblockreihen ist beispielsweise in der Tagung des VDI zum Thema "Reifen- Fahrwerk - Fahrbahn" vom 25.10.05 und dem hierzu veröffentlichten Tagungsprotokoll (ISBN-Nr. 3-18-091912-4): VDI-Berichte 1912, S.227ff. unter dem Titel "Vorhersage von Reifeneigenschaften in der Profilentwicklung" (Vortragende: Dr. -Ing. W.Strache u.a.") dargestellt.

Auch bei einem symmetrischen Laufstreifenprofil gilt für die Umfangssteifigkeiten W1, W2, W3, W4 und W5 :

$$W1 > W2 > W3 < W4 < W5.$$

Dabei gelten folgende Beziehungen:

$$(0,7 *W1) \le W2 \le (0,8 *W1),$$

$$(0,6 *W1) \le W3 \le (0,7 *W1),$$

$$(0,7 *W1) \le W4 \le (0,8 *W1)$$

und

$$(0,9 *W1) \le W5 \le (1,0 *W1).$$

Beispielsweise sind die Umfangssteifigkeiten wie folgt gewählt: W2 = 0,75W1, W3=0,65W1, W4=0,75W1, W5=1,0W1.

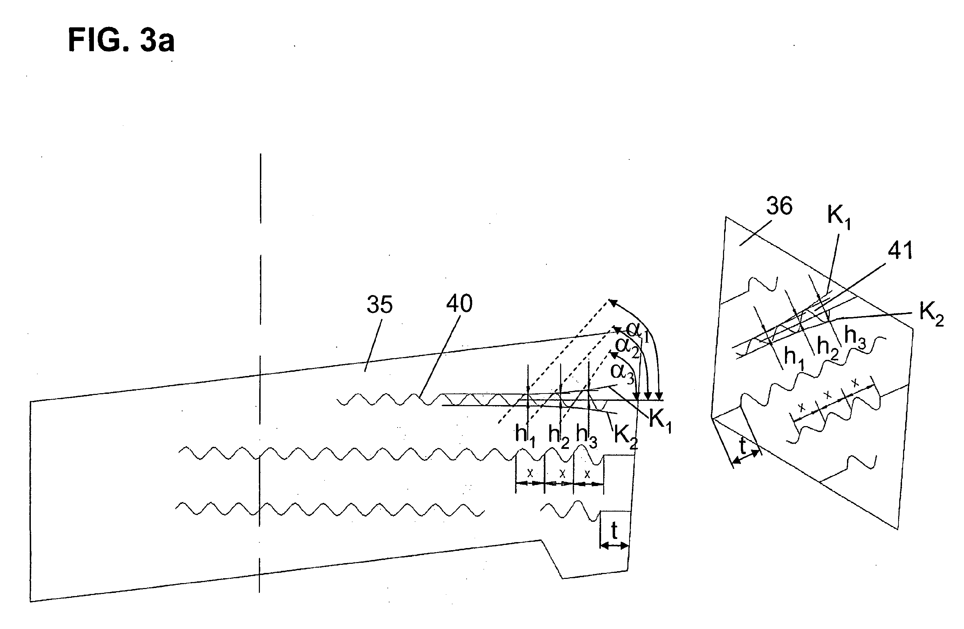

Fig. 3a zeigt jeweils ein Profilblockelement 35 und 36 der Profilblockreihe 19 bzw. 20 in stark vergrößerter Darstellung. Dabei ist zu erkennen, dass in den beiden Profilblockelementen 35 und 36 sinusförmig gewählte Feineinschnitte 40 bzw. 41 ausgebildet sind, die sich jeweils ausgehend von einem stumpfen Ende im Profilblock in Richtung Profilblockkante mit längs ihrer Erstreckungsrichtung progressiv zunehmenden Amplituden ihrer Wellenform ausgebildet sind. In beiden Profilblockelementen 35 und 36 ist jeweils an einem Feineinschnitt 40 bzw. 41 eine erste die Maxima der Wellenform berührende einhüllenden Kurve $K_1$ und eine zweite die Minima der Wellenform berührende einhüllenden Kurve $K_2$ dargestellt. Dabei ist deutlich erkennbar, dass längs der Erstreckungsrichtung des Feineinschnitts 40 bzw. 41 der Abstand der einhüllenden Kurven $K_1$ und $K_2$ zueinander progressiv steigend zunimmt. Bei drei aufeinander folgenden Schwingungsphasen mit der Wellenlänge x ist auch der Abstand der beiden Kurven $K_1$ und $K_2$ zueinander in den aufeinander folgenden Maxima mit $h_1$, $h_2$ und $h_3$ eingezeichnet. Es ist deutlich erkennbar, dass der bei den drei aufeinander folgenden Maxima eingezeichnete Abstand $h_1$, $h_2$ und $h_3$ progressiv zunimmt. Die Differenz ($h_2 - h_1$) ist kleiner der Differenz ($h_3 - h_2$).

In der Figur 3a ist auch zu erkennen, dass der Steigungswinkel $\alpha$ des Wellenverlaufs zur Nulllinie der Wellenform im Schnittpunkt mit der Nulllinie (Nulldurchgang) längs der Erstreckung des Feineinschnitts 40 bzw. 41 jeweils von Nulldurchgang zu Nulldurchgang progressiv zunehmend größer wird. Am Beispiel eines Feineinschnitts 40 ist jeweils im Abstand einer Schwingungsphase jeweils der Steigungswinkel $\alpha_1$, $\alpha_2$ und $\alpha_3$ - und somit am Beispiel jedes zweiten Nulldurchgangs im Schnittpunkt der Wellenform mit der Nulllinie (Nulldurchgang) dargestellt. Dabei ist deutlich erkennbar, dass $\alpha_1 < \alpha_2 < \alpha_3$, wobei für die Differenzen der Steigungswinkel gilt: ($\alpha_3 - \alpha_2$) >($\alpha_2 - \alpha_1$).

Im dargestellten Ausführungsbeispiel ist die Wellenlänge x konstant gewählt.

Längs der progressiv zunehmenden Amplitude erstreckt sich der wellenförmige Feineinschnitt 40 bzw. 41 jeweils bis in den Abstand t von einer das Profilblockelement zu einer Profilrille begrenzenden Profilblockflanke des Profilblockelements, um dann geradlinig bis zur Profilblockflanke erstreckt in die Profilrille zu münden. Der Abstand t ist so gewählt, dass für ihn gilt: $3mm \leq t \leq 5mm$.

In einer besonderen Ausführungsform ist innerhalb der Aufstandsbreite TW der Lauffläche in jedem der Profilblockelemente zu allen das jeweilige Profilblockelement jeweils begrenzenden Profilrillen jeweils ein Randbereich, der sich über einen Abstand von t mit $3mm \leq t \leq 5mm$ erstreckt, frei von wellenförmigen Ausbildungen von Feineinschnitten gewählt..

Wie in Fig. 3a zu erkennen ist, sind am Beispiel des Profilblockelementes 36 mehrere in ihrem Erstreckungsverlauf parallel ausgebildete sinusförmige gewellte Feineinschnitte 41 ausgebildet, wobei jeweils zwei benachbarte Feineinschnitte 41 längs ihrer Erstreckung einen gegenläufigen progressiven Steigungsverlauf ihrer Amplituden bzw. aufweisen. Zwei derartige benachbarte Feineinschnitte 41 mit gegenläufig verlaufenden progressivem Steigungsverlauf ihrer Amplituden und ihres Steigungswinkels $\alpha$ im Nulldurchgang sind im Anschluss an ihrem wellenförmigen Verlauf jeweils in Erstreckungsrichtung des Feineinschnitts 41 an gegenüberliegende Profilblockkanten eines Profilblockelements und die durch diese begrenzten Rillen angebunden.

In der Fig. 3a sind Feineinschnitte 40 und 41 dargestellt mit einer längs ihrer Erstreckung konstanten Wellenlänge x.

In einer alternativen - nicht dargestellten - Ausführung sind die Feineinschnitte 40 bzw. 41 mit einem längs ihrer jeweiligen Haupterstreckungsrichtung progressiv zunehmenden Amplitudenverlauf der sinusförmigen Wellenform bzw. ihres Steigungswinkels $\alpha$ im Nulldurchgang und zusätzlich mit einer längs ihrer Erstreckungsrichtung in Richtung zunehmender Amplitude bzw. ihres Steigungswinkels $\alpha$ im Nulldurchgang mit zunehmender Frequenz der Wellenform ausgebildet.

In einem besonderen Ausführungsbeispiel ist dabei die Frequenz über die gesamte Erstreckung des Feineinschnitts 40 bzw. 41 mit einer Zunahme von 0 bis 10% ausgebildet.

Die Feineinschnitte 40 und 41 sind längs ihres sinusförmig gewellten Erstreckungsbereichs mit einer in radialer Richtung des Fahrzeugluftreifens gemessenen Tiefe von 8 bis 9 mm ausgebildet. Im geradlinigen Anbindungsbereich t zur Profilkante sind die Feineinschnitte 40 bzw. 41 mit einer in radialer Richtung des Fahrzeugluftreifens gemessenen Tiefe von beispielsweise 2mm ausgebildet.

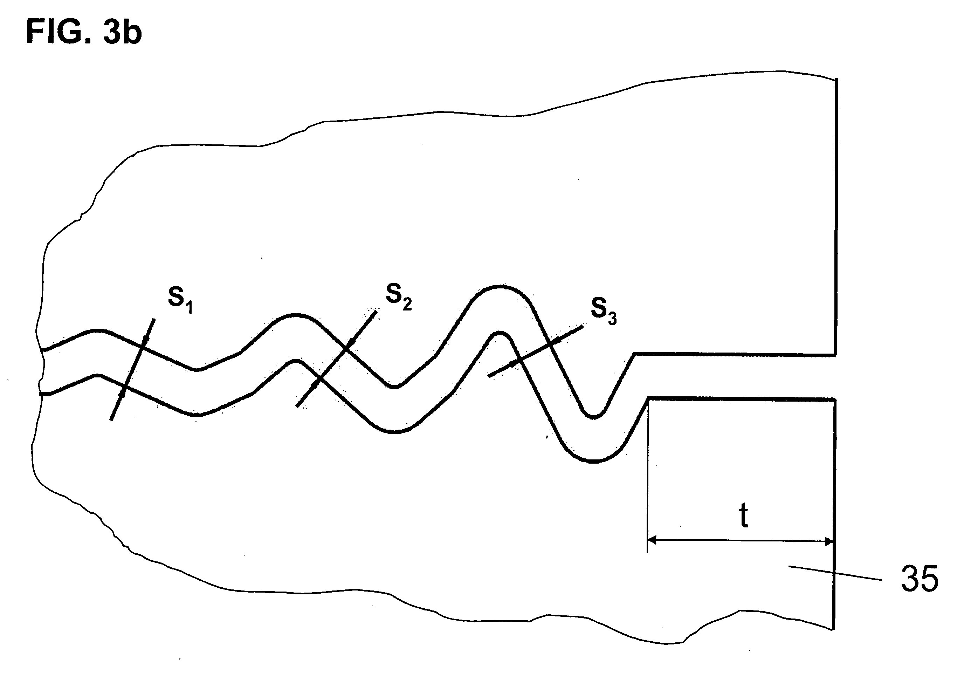

Die Feineinschnitte sind im unbelasteten Zustand der Fig. 3 mit einer Spaltbreite von 0,3 bis 1,0 mm, z..B. 0,5 mm ausgebildet

Fig. 3b zeigt in noch stärker vergrößerter Darstellung gegenüber der Darstellung von Fig. 3a am Beispiel eines ausschnittsweise dargestellten Feineinschnitts 40 des Profilblockelements 35 den Zustand des Feineinschnitts bei Durchlaufen des Latsches. Dabei wird deutlich erkennbar, dass über einen langen Erstreckungsbereich des jeweiligen Feineinschnitts 40 bis in die Nähe der maximalen Amplitude bzw. der maximalen Steigung $\alpha$ im Nulldurchgang selbst im Bereich der Nulldurchgänge ein sehr deutlicher Öffnungsspalt S entsteht, der in Richtung der maximalen Amplitude bzw. des maximalen Steigungswinkels $\alpha$ im Nulldurchgang über die gesamte Erstreckung des Feineinschnitts langsam abnehmend geöffnet ist. Die Spaltbreite $S_1, S_2, S_3$ bzw. des maximalen Steigungswinkels $\alpha$ im Nulldurchgang in im Abstand einer Phasenlänge aufeinander folgenden Steigungsbereichen nimmt nimmt von Phase zu Phase ab. Im Bereich der größten Amplituden bzw. des maximalen Steigungswinkels $\alpha$ im Nulldurchgang ist aufgrund des steilen Flankenverlaufs der Wellen zwischen Minimum und Maximum bzw. von Maximum und Minimum am weitesten geschlossen.

Abhängig von der Reifenbreite und dem Profildesign können sich unterschiedliche Anzahlen von Profilklotzreihen mit unterschiedlichen Umfangssteifigkeiten als vorteilhaft erweisen. Dabei würde man geringere Anzahlen von Profilblockreihen für schmalere Reifendimensionen und höhere Anzahlen Profilblockreihen für breitere Reifendimensionen verwenden. Bei einer Verwendung von nur einer bzw. zwei Blockreihen im Erstreckungsbereich von TW lässt sich eine Entkoppelung der Profilblockreihen in Schulter- und Äquatorialbereich des Reifens nicht sinnvoll bewerkstelligen.

Je größer die Anzahl der entkoppelten Profilblockreihen desto feiner lässt sich die für die Profilblockreihen jeweils notwendige Umfangssteifigkeit einstellen und somit das Abriebsbild verbessern. Eine Erhöhung der entkoppelten Profilblockreihen auf eine sehr große Zahl ist jedoch nicht sinnvoll, da die Profilblockreihen auch für die Übertragung von Seitenkräften z.B. beim Handling verantwortlich sind. Aus diesen Erwägungen erscheint eine Variation der Profilblockreihenanzahlen zwischen 3 bis 7 besonders sinnvoll.

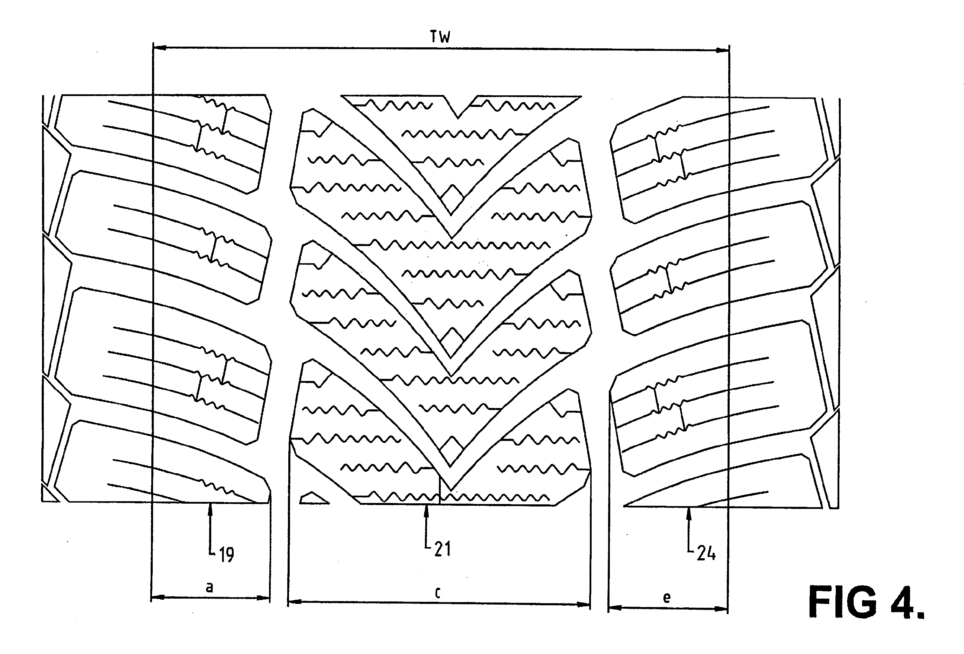

Fig. 4 zeigt ein alternatives Laufflächenprofil mit den vom linken Schulterbereich zum rechten Schulterbereich drei axial nebeneinander ausgebildeten Profilblockreihen 19, 21 und 24. Die Profilblockreihen 19,21 und 24 sind mit axialen Erstreckungsbreiten a, c und e ausgebildet, wobei für a, c und e gilt: $0{,}19*TW \leq a \leq 0{,}27*TW$, $0{,}46*TW \leq c \leq 0{,}62*TW$, $0{,}19*TW \leq e \leq 0{,}27*TW$.

Für die Umfangssteifigkeit W1 der Profilblockreihe 19, die Umfangssteifigkeit W2 der Profilblockreihe 21 und die Umfangssteifigkeit W3 der Profilblockreihe 24 gilt

$$0{,}6W1 \leq W2 \leq 0{,}8\,W1,\ 0{,}9W1 \leq W3 \leq 1{,}0W1$$

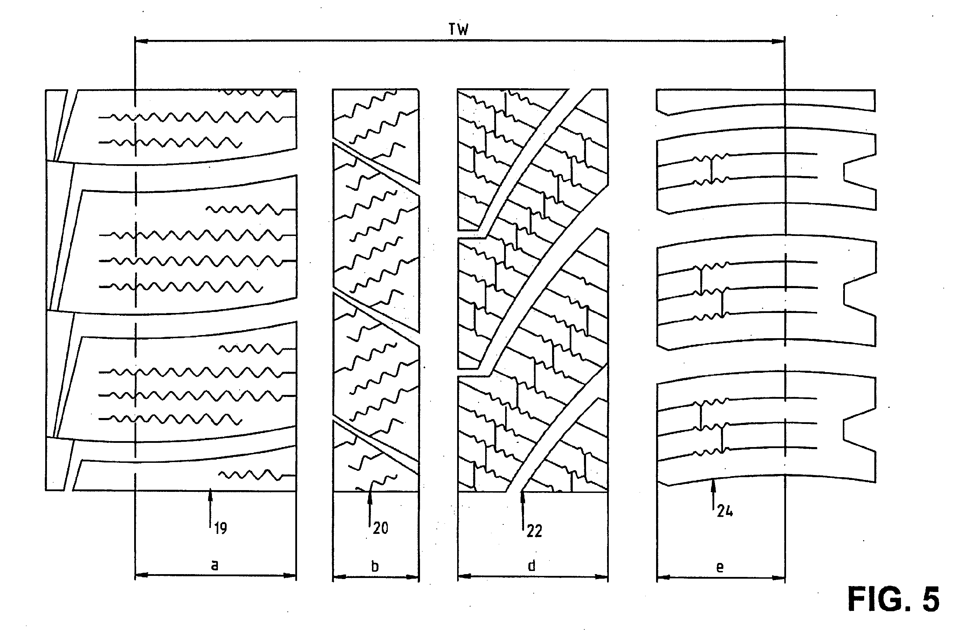

Fig. 5 zeigt ein alternatives Laufflächenprofil mit den vom linken Schulterbereich zum rechten Schulterbereich vier axial nebeneinander ausgebildeten Profilblockreihen 19, 20,22 und 24. Die Profilblockreihen 19,20,22 und 24 sind mit axialen Erstreckungsbreiten a, b, d und e ausgebildet, wobei für a, b, d und e gilt: $0{,}17*TW \leq a \leq 0{,}26*TW$, $0{,}12*TW \leq b \leq 0{,}34*TW$, $0{,}12*TW \leq d \leq 0{,}34*TW$, $0{,}17*TW \leq e \leq 0{,}26*TW$.

Für die Umfangssteifigkeit W1 der Profilblockreihe 19, die Umfangssteifigkeit W2 der Profilblockreihe 20, die Umfangssteifigkeit W3 der Profilblockreihe 22, und die Umfangssteifigkeit W4 der Profilblockreihe 24 gilt

$$0{,}7W1 \leq W2 \leq 0{,}8\,W1,\ 0{,}65\,W1 \leq W3 \leq 0{,}8W1,\ 0{,}9W1 \leq W4 \leq 1{,}0\,W1.$$

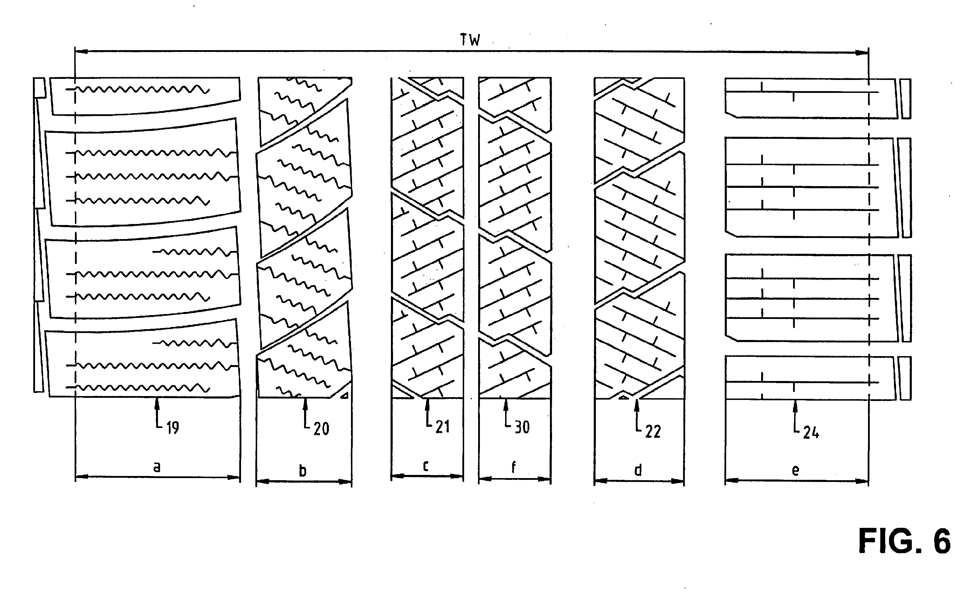

Fig. 6 zeigt ein alternatives Laufflächenprofil mit den vom linken Schulterbereich zum rechten Schulterbereich sechs axial nebeneinander ausgebildeten Profilblockreihen 19, 20, 21, 30, 22 und 24. Die Profilblockreihen 19, 20, 21, 30, 22 und 24 sind mit axialen Erstreckungsbreiten a, b,c,f, d und e ausgebildet, wobei für a, b,c,f,d und e gilt:

$$0{,}15*TW \leq a \leq 0{,}23*TW,\ 0{,}8*TW \leq b \leq 0{,}15*TW,\ 0{,}8*TW \leq c \leq 0{,}15*TW,$$
$$0{,}8*TW \leq f \leq 0{,}15*TW,\ 0{,}8*TW \leq d \leq 0{,}15*TW,\ 0{,}15*TW \leq e \leq 0{,}23*TW.$$

Für die Umfangssteifigkeit W1 der Profilblockreihe 19, die Umfangssteifigkeit W2 der Profilblockreihe 20, die Umfangssteifigkeit W3 der Profilblockreihe 21, die Umfangssteifigkeit W4 der Profilblockreihe 30, die Umfangssteifigkeit W5 der Profilblockreihe 22 und die Umfangssteifigkeit W6 der Profilblockreihe 24gilt

$$0{,}7\,W1 \leq W2 \leq 0{,}8\,W1,\ 0{,}65W1 \leq W3 \leq 0{,}75W1,\ 0{,}6W1 \leq W4 \leq 0{,}7W1,$$
$$0{,}7W1 \leq W5 \leq 0{,}8W1,\ 0{,}85W1 \leq W6 \leq 1{,}0W1.$$

Fig. 7 zeigt ein alternatives Laufflächenprofil mit den vom linken Schulterbereich zum rechten Schulterbereich sieben axial nebeneinander ausgebildeten Profilblockreihen 19, 20, 31, 21, 30, 22 und 24. Die Profilblockreihen 19, 20, 31, 21, 30, 22 und 24 sind mit axialen Erstreckungsbreiten a, b,f,c,g, d und e ausgebildet, wobei für a, b,f,c,g, d und e gilt:

$$0{,}13*TW \leq a \leq 0{,}21*TW,\ 0{,}8*TW \leq b \leq 0{,}15*TW,\ 0{,}8*TW \leq f \leq 0{,}15*TW,$$
$$0{,}8*TW \leq c \leq 0{,}15*TW,\ 0{,}8*TW \leq g \leq 0{,}15*TW,\ 0{,}8*TW \leq d \leq 0{,}15*TW,$$
$$0{,}13*TW \leq e \leq 0{,}21*TW.$$

Für die Umfangssteifigkeit W1 der Profilblockreihe 19, die Umfangssteifigkeit W2 der Profilblockreihe 20, die Umfangssteifigkeit W3 der Profilblockreihe 31, die Umfangssteifigkeit W4 der Profilblockreihe 21, die Umfangssteifigkeit W5 der Profilblockreihe 30, die Umfangssteifigkeit W6 der Profilblockreihe 22 und die Umfangssteifigkeit W7 der Profilblockreihe 24 gilt

$$0,8\ W1 \leq W2 \leq 0,9\ W1,\ 0,7W1 \leq W3 \leq 0,8W1,\ 0,6W1 \leq W4 \leq 0,7W1,$$

$$0,65W1 \leq W5 \leq 0,8W1,\ 0,75W1 \leq W6 \leq 0,9W1\ \text{und}\ 0,9W1 \leq W7 \leq 1,0W1.$$

Bezugszeichenliste

(Teil der Beschreibung)

1 Laufstreifen
2 Kern
3 Wulstverstärker
4 Kernprofil
5 Hornprofil
6 Innenschicht
7 Seitenstreifen
8 Karkassenlage
9 Karkassenlage
10 Schulterstreifen
11 Gürtellage
12 Umfangsrille
13 Gürtellage
14
15
16 Umfangsrille
17 Umfangsrille
18 Umfangsrille
19 Profilblockreihe
20 Profilblockreihe
21 Profilblockreihe
22 Profilblockreihe
23 Wulststreifen
24 Profilblockreihe
25 Querrille
26 Querrille
27 Querrille
28 Querrille
29 Querrille
30 Profilblockreihe
31 Profilblockreihe
32
33
34
35 Profilblockelement
36 Profilblockelement
37 Profilblockelement
38 Profilblockelement
39 Profilblockelement
40 Feineinschnitt
41 Feineinschnitt
42 Feineinschnitt
43 Feineinschnitt

44    Feineinschnitt

**Patentansprüche**

**1.**  Laufstreifenprofil - insbesondere Winterlaufstreifenprofil - eines Fahrzeugluftreifens mit mehreren axial zu einander benachbarten, über den gesamten Umfang des Fahrzeugluftreifens erstreckten Profilblockreihen, wobei jede der Profilblockreihen aus mehreren über den Umfang des Fahrzeugluftreifens verteilten in Umfangsrichtung hintereinander und jeweils durch Querrillen von einander beabstandeten Profilblockelementen ausgebildet ist,

wobei die beiden axial äußeren, jeweils eine Schulterprofilblockreihe bildenden Profilblockreihen mit einer größeren durchschnittlichen Umfangssteifigkeit als die axial inneren, zwischen den beiden äußeren Profilblockreihen angeordneten Profilblockreihen ausgebildet sind,

**dadurch gekennzeichnet,**

**dass** es mit fünf benachbarten in Umfangsrichtung über den Fahrzeugluftreifen erstreckten Profilblockreihen (19,20,21,22,24) und insbesondere symmetrisch ausgebildet ist, mit einer ersten Profilblockreihe (19) im axialen Erstreckungsbereich der am Fahrzeug vom Fahrzeug wegweisenden Außenschulter, mit einer zu der ersten Profilblockreihe zur zum Fahrzeug hinweisenden Innenschulter hin axial benachbarten zweiten Profilblockreihe (20), mit einer zu der zweiten Profilblockreihe (20) zur zum Fahrzeug hinweisenden Innenschulter hin axial benachbarten dritten Profilblockreihe (21), mit einer zu der dritten Profilblockreihe (21) zur zum Fahrzeug hinweisenden Innenschulter hin axial benachbarten vierten Profilblockreihe (**22**) und mit einer zu der vierten Profilblockreihe (**22**) zur zum Fahrzeug hinweisenden Innenschulter hin axial benachbarten **und** im axialen Erstreckungsbereich der am Fahrzeug zum Fahrzeug **hinweisenden** Innenschulter ausgebildeten fünften Profilblockreihe (**24**), wobei die zweite Profilblockreihe (20) mit einer durchschnittlichen Umfangssteifigkeit ausgebildet ist, die das 0,7- bis 0,8-fache der durchschnittlichen Umfangssteifigkeit der ersten Profilblockreihe (19) beträgt,

wobei die dritte Profilblockreihe (21) mit einer durchschnittlichen Umfangssteifigkeit ausgebildet ist, die das 0,6- bis 0,7-fache der durchschnittlichen Umfangssteifigkeit der ersten Profilblockreihe (19) beträgt,

wobei die vierte Profilblockreihe (22) mit einer durchschnittlichen Umfangssteifigkeit ausgebildet ist, die das 0,7- bis 0,8-fache der durchschnittlichen Umfangssteifigkeit der ersten Profilblockreihe (19) beträgt und

wobei die fünfte Profilblockreihe (**24**) mit einer durchschnittlichen Umfangssteifigkeit ausgebildet ist, die das 0,9- bis 1,0-fache der durchschnittlichen Umfangssteifigkeit der ersten Profilblockreihe (19) beträgt.

**2.**  Laufstreifenprofil gemäß den Merkmalen von Anspruch 1,

mit einer axialen Erstreckung a der ersten Profilblockreihe (19) innerhalb der axialen Erstreckung TW der Reifenaufstandsfläche, mit einer axialen Erstreckung b des zweiten Profilblockreihe (20), mit einer axialen Erstreckung c des dritten Profilblockreihe (21), mit einer axialen Erstreckung d des vierten Profilblockreihe (22) und mit einer axialen Erstreckung e der fünften Profilblockreihe (23) innerhalb der axialen Erstreckung TW der Reifenaufstandsfläche, wobei das Maß der axialen Erstreckungen a, b, c, d und e gilt:

$$0,22*TW \leq a \leq 0,25*TW, \; 0,11*TW \leq b \leq 0,15*TW, \; 0,1*TW \leq c \leq 0,14*TW,$$
$$0,11*TW \leq d \leq 0,15*TW, \; 0,18*TW \leq e \leq 0,22*TW.$$

**3.**  Laufstreifenprofil - insbesondere Winterlaufstreifenprofil - eines Fahrzeugluftreifens mit mehreren axial zu einander benachbarten, über den gesamten Umfang des Fahrzeugluftreifens erstreckten Profilblockreihen , wobei jede der Profilblockreihen aus mehreren über den Umfang des Fahrzeugluftreifens verteilten in Umfangsrichtung hintereinander und jeweils durch Querrillen von einander beabstandeten Profilblockelementen ausgebildet ist,

wobei die beiden axial äußeren, jeweils eine Schulterprofilblockreihe bildenden Profilblockreihen mit einer größeren durchschnittlichen Umfangssteifigkeit als die axial inneren, zwischen den beiden äußeren Profilblockreihen angeordneten Profilblockreihen ausgebildet sind,

**dadurch gekennzeichnet**,

das es asymmetrisch und mit fünf benachbarten in Umfangsrichtung über den Fahrzeugluftreifen erstreckten Profilblockreihen (19,20,21,22,24) ausgebildet ist, mit einer ersten Profilblockreihe (19) im axialen Erstreckungsbereich der am Fahrzeug vom Fahrzeug wegweisenden Außenschulter, mit einer zu der ersten Profilblockreihe (19) zur zum Fahrzeug hinweisenden Innenschulter hin axial benachbarten zweiten Profilblockreihe (20), mit einer zu der zweiten Profilblockreihe (20) zur zum Fahrzeug hinweisenden Innenschulter hin axial benachbarten dritten Profilblockreihe (21), mit einer zu der dritten Profilblockreihe (21) zur zum Fahrzeug hinweisenden Innenschulter hin axial benachbarten vierten Profilblockreihe (22) und mit einer zu der vierten Profilblockreihe (22) zur zum Fahrzeug hinweisenden Innenschulter hin axial benachbarten **und** im axialen Erstreckungsbereich der am Fahrzeug zum Fahrzeug **hinweisenden** Innenschulter ausgebildeten fünften Profilblockreihe (**24**),

wobei die zweite Profilblockreihe (20) mit einer durchschnittlichen Umfangssteifigkeit ausgebildet ist, die das 0,7- bis 0,8-fache der durchschnittlichen Umfangssteifigkeit der ersten Profilblockreihe (19) beträgt,

wobei die dritte Profilblockreihe (21) mit einer durchschnittlichen Umfangssteifigkeit ausgebildet ist, die das 0,6- bis 0,7-fache der durchschnittlichen Umfangssteifigkeit der ersten Profilblockreihe (19) beträgt,

wobei die vierte Profilblockreihe (22) mit einer durchschnittlichen Umfangssteifigkeit ausgebildet ist, die das 0,65- bis 0,75-fache der durchschnittlichen Umfangssteifigkeit der ersten Profilblockreihe (19) beträgt und wobei die fünfte Profilblockreihe (**24**) mit einer durchschnittlichen Umfangssteifigkeit ausgebildet ist, die das 0,85- bis 0,95-fache der durchschnittlichen Umfangssteifigkeit der ersten Profilblockreihe (19) beträgt.

4. Laufstreifenprofil gemäß den Merkmalen von Anspruch 3,
mit einer axialen Erstreckung a der ersten Profilblockreihe (19) innerhalb der axialen Erstreckung TW der Reifenaufstandsfläche, mit einer axialen Erstreckung b des zweiten Profilblockreihe (20), mit einer axialen Erstreckung c des dritten Profilblockreihe (21), mit einer axialen Erstreckung d des vierten Profilblockreihe (22) und mit einer axialen Erstreckung e der fünften Profilblockreihe (23) innerhalb der axialen Erstreckung TW der Reifenaufstandsfläche, wobei das Maß der axialen Erstreckungen a, b, c, d und e gilt: $0{,}22 \cdot TW \le a \le 0{,}25 \cdot TW$, $0{,}11 \cdot TW \le b \le 0{,}15 \cdot TW$, $0{,}1 \cdot TW \le c \le 0{,}14 \cdot TW$, $0{,}11 \cdot TW \le d \le 0{,}15 \cdot TW$, $0{,}18 \cdot TW \le e \le 0{,}25 \cdot TW$.

5. Laufstreifenprofil - insbesondere Winterlaufstreifenprofil - eines Fahrzeugluftreifens mit mehreren axial zu einander benachbarten, über den gesamten Umfang des Fahrzeugluftreifens erstreckten Profilblockreihen, wobei jede der Profilblockreihen aus mehreren über den Umfang des Fahrzeugluftreifens verteilten in Umfangsrichtung hintereinander und jeweils durch Querrillen von einander beabstandeten Profilblockelementen ausgebildet ist,
wobei die beiden axial äußeren, jeweils eine Schulterprofilblockreihe bildenden Profilblockreihen mit einer größeren durchschnittlichen Umfangssteifigkeit als die axial inneren, zwischen den beiden äußeren Profilblockreihen angeordneten Profilblockreihen,
**dadurch gekennzeichnet,**
**dass** es mit vier benachbarten in Umfangsrichtung über den Fahrzeugluftreifen erstreckten, Profilblockreihen (19, 20, 22, 24) ausgebildet ist, mit der ersten Profilblockreihe (19) im axialen Erstreckungsbereich der am Fahrzeug vom Fahrzeug weg weisenden Außenschulter, mit einer zur ersten Profilblockreihe (19) zur zum Fahrzeug hinweisenden Innenschulter hin axial benachbarten zweiten Profilblockreihe (20), mit einer zur zweiten Profilblockreihe (20) zur zum Fahrzeug hinweisenden Innenschulter hin axial benachbarten dritten Profilblockreihe (22), mit einer zur dritten Profilblockreihe (22) zur zum Fahrzeug hinweisenden Innenschulter hin axial benachbarten vierten Profilblockreihe (24),
wobei die zweite Profilblockreihe (20) mit einer durchschnittlichen Umfangssteifigkeit ausgebildet ist, die das 0,7 bis 0,8-fache der durchschnittlichen Umfangssteifigkeit der ersten Blockreihe (19) beträgt,
wobei die dritte Profilblockreihe (22) mit einer durchschnittlichen Umfangssteifigkeit ausgebildet ist, die das 0,65 bis 0,8-fache der durchschnittlichen Umfangssteifigkeit der ersten Profilblockreihen (19) beträgt,
wobei die vierte Profilblockreihe (24) mit einer durchschnittlichen Umfangssteifigkeit ausgebildet ist, die das 0,9 bis 1,0-fache der durchschnittlichen Umfangssteifigkeit der ersten Profilblockreihen (19) beträgt

6. Laufstreifen gemäß den Merkmalen von Anspruch 5,
mit einer axialen Erstreckung a der ersten Profilblockreihe (19) innerhalb der axialen Erstreckung TW der Reifenaufstandsfläche, mit einer axialen Erstreckung b der zweiten Profilblockreihe (20), mit einer axialen Erstreckung d der dritten Profilblockreihe (22), mit einer axialen Erstreckung e der vierten Profilblockreihe (24), wobei das Maß der axialen Erstreckung a, b, d, und e gilt:

a, e erstrecken sich über 15 bis 40% von TW,
wobei b und d sich in Breiten über 10-70% von TW erstrecken,
wobei insbesondere gilt:

$0{,}17 \cdot TW \le a \le 0{,}26 \cdot TW$,
$0{,}12 \cdot TW \le b \le 0{,}34 \cdot TW$, $0{,}12 \cdot TW \le d \le 0{,}34 \cdot TW$, $0{,}17 \cdot TW \le e \le 0{,}26 \cdot TW$

7. Laufstreifenprofil - insbesondere Winterlaufstreifenprofil - eines Fahrzeugluftreifens mit mehreren axial zu einander benachbarten, über den gesamten Umfang des Fahrzeugluftreifens erstreckten Profilblockreihen , wobei jede der Profilblockreihen aus mehreren über den Umfang des Fahrzeugluftreifens verteilten in Umfangsrichtung hintereinander und jeweils durch Querrillen von einander beabstandeten Profilblockelementen ausgebildet ist,
wobei die beiden axial äußeren, jeweils eine Schulterprofilblockreihe bildenden Profilblockreihen mit einer größeren durchschnittlichen Umfangssteifigkeit als die axial inneren, zwischen den beiden äußeren Profilblockreihen angeordneten Profilblockreihen,

**dadurch gekennzeichnet,**

**dass** es mit sechs benachbarten in Umfangsrichtung über den Fahrzeugluftreifen erstreckten, Profilblockreihen (19,20,21,30,22,24) ausgebildet ist, mit der ersten Profilblockreihe (19) im axialen Erstreckungsbereich der am Fahrzeug vom Fahrzeug weg weisenden Außenschulter, mit einer zur ersten Profilblockreihe (19) zur zum Fahrzeug hinweisenden Innenschulter hin axial benachbarten zweiten Profilblockreihe (20), mit einer zur zweiten Profilblockreihe (20) zur zum Fahrzeug hinweisenden Innenschulter hin axial benachbarten dritten Profilblockreihe (21), mit einer zur dritten Profilblockreihe (21) zur zum Fahrzeug hinweisenden Innenschulter hin axial benachbarten vierten Profilblockreihe (30), mit einer zur vierten Profilblockreihe (30) zur zum Fahrzeug hinweisenden Innenschulter hin axial benachbarten fünften Profilblockreihe (22), mit einer zur fünften Profilblockreihe (22) zur zum Fahrzeug hinweisenden Innenschulter hin axial benachbarten sechsten Profilblockreihe (24),

wobei die zweite Profilblockreihe (20) mit einer durchschnittlichen Umfangssteifigkeit ausgebildet ist, die das 0,7 bis 0,8-fache der durchschnittlichen Umfangssteifigkeit der ersten Profilblockreihe (19) beträgt,

wobei die dritte Profilblockreihe (21) mit einer durchschnittlichen Umfangssteifigkeit ausgebildet ist, die das 0,65bis0,75-fache der durchschnittlichen Umfangssteifigkeit der ersten Profilblockreihen (19) beträgt,

wobei die vierte Profilblockreihe (30) mit einer durchschnittlichen Umfangssteifigkeit ausgebildet ist, die das 0,6bis0,7-fache der durchschnittlichen Umfangssteifigkeit der ersten Profilblockreihen (19) beträgt,

wobei die fünfte Profilblockreihe (22) mit einer durchschnittlichen Umfangssteifigkeit ausgebildet ist, die das 0,7bis0,8-fache der durchschnittlichen Umfangssteifigkeit der ersten Profilblockreihen(19) beträgt,

wobei die sechste Profilblockreihe (24) mit einer durchschnittlichen Umfangssteifigkeit ausgebildet ist, die das 0,85bis1,0-fache der durchschnittlichen Umfangssteifigkeit der ersten Profilblockreihen(19) beträgt

8. Laufstreifen gemäß den Merkmalen von Anspruch 7,

mit einer axialen Erstreckung a der ersten Profilblockreihe (19) innerhalb der axialen Erstreckung der Reifenaufstandsfläche TW, mit einer axialen Erstreckung b der zweiten Profilblockreihe (20), mit einer axialen Erstreckung c der dritten Profilblockreihe (21), mit einer axialen Erstreckung f der vierten Profilblockreihe (30), mit einer axialen Erstreckung d der fünften Profilblockreihe (22), mit einer axialen Erstreckung e der sechsten Profilblockreihe (24), wobei das Maß der axialen Erstreckung a, b, c, f, d und e gilt:

a, f erstrecken sich über 10 bis 35% von TW,
wobei b, c, d, e sich in über eine axiale Breite von 6 bis 62% von TW erstrecken,
wobei insbesonderen gilt:

$0,15*TW \leq a \leq 0,23*TW, 0,8*TW \leq b \leq 0,15*TW, 0,8*TW \leq c \leq 0,15*TW,$
$0,8*TW \leq f \leq 0,15*TW, 0,8*TW \leq d \leq 0,15*TW, 0,15*TW \leq e \leq 0,23*TW$

9. Laufstreifenprofil - insbesondere Winterlaufstreifenprofil - eines Fahrzeugluftreifens mit mehreren axial zu einander benachbarten, über den gesamten Umfang des Fahrzeugluftreifens erstreckten Profilblockreihen , wobei jede der Profilblockreihen aus mehreren über den Umfang des Fahrzeugluftreifens verteilten in Umfangsrichtung hintereinander und jeweils durch Querrillen von einander beabstandeten Profilblockelementen ausgebildet ist, wobei die beiden axial äußeren, jeweils eine Schulterprofilblockreihe bildenden Profilblockreihen mit einer größeren durchschnittlichen Umfangssteifigkeit als die axial inneren, zwischen den beiden äußeren Profilblockreihen angeordneten Profilblockreihen,

**dadurch gekennzeichnet,**

**dass** es mit sieben benachbarten in Umfangsrichtung über den Fahrzeugluftreifen erstreckten, Profilblockreihen (19,20,31,21,30,22,24) ausgebildet ist, mit der ersten Profilblockreihe (19) im axialen Erstreckungsbereich der am Fahrzeug vom Fahrzeug weg weisenden Außenschulter, mit einer zur ersten Profilblockreihe (19) zur zum Fahrzeug hinweisenden Innenschulter hin axial benachbarten zweiten Profilblockreihe (20), mit einer zur zweiten Profilblockreihe (20)zur zum Fahrzeug hinweisenden Innenschulter hin axial benachbarten dritten Profilblockreihe (31), mit einer zur dritten Profilblockreihe (31) zur zum Fahrzeug hinweisenden Innenschulter hin axial benachbarten vierten Profilblockreihe (21), mit einer zur vierten Profilblockreihe (21) zur zum Fahrzeug hinweisenden Innenschulter hin axial benachbarten fünften Profilblockreihe (30), mit einer zur fünften Profilblockreihe (30)zur zum Fahrzeug hinweisenden Innenschulter hin axial benachbarten sechsten Profilblockreihe (22),

mit einer zur sechsten Profilblockreihe (22) zur zum Fahrzeug hinweisenden Innenschulter hin axial benachbarten siebten Profilblockreihe (24),

wobei die zweite Profilblockreihe (20) mit einer durchschnittlichen Umfangssteifigkeit ausgebildet ist, die das 0,8 bis 0,9-fache der durchschnittlichen Umfangssteifigkeit der ersten Profilblockreihe (19) beträgt,

wobei die dritte Profilblockreihe (31) mit einer durchschnittlichen Umfangssteifigkeit ausgebildet ist, die das 0,7 bis 0,8-fache der durchschnittlichen Umfangssteifigkeit der ersten Profilblockreihen (19) beträgt,

wobei die vierte Profilblockreihe (21) mit einer durchschnittlichen Umfangssteifigkeit ausgebildet ist, die das 0,6 bis 0,7-fache der durchschnittlichen Umfangssteifigkeit der ersten Profilblockreihen (19) beträgt,

wobei die fünfte Profilblockreihe (30) mit einer durchschnittlichen Umfangssteifigkeit ausgebildet ist, die das 0,65 bis 0,8-fache der durchschnittlichen Umfangssteifigkeit der ersten Profilblockreihen (19) beträgt,

wobei die sechste Profilblockreihe (22) mit einer durchschnittlichen Umfangssteifigkeit ausgebildet ist, die das 0,75 bis0,9-fache der durchschnittlichen Umfangssteifigkeit der ersten Profilblockreihen (19) beträgt.

wobei die siebte Profilblockreihe (24) mit einer durchschnittlichen Umfangssteifigkeit ausgebildet ist, die das 0,9 bis1,0-fache der durchschnittlichen Umfangssteifigkeit der ersten Profilblockreihen (19) beträgt

10. Laufstreifen gemäß den Merkmalen von Anspruch 9,

mit einer axialen Erstreckung a der ersten Profilblockreihe (19) innerhalb der axialen Erstreckung TW der Reifenaufstandsfläche, mit einer axialen Erstreckung b der zweiten Profilblockreihe (20), mit einer axialen Erstreckung f der dritten Profilblockreihe (31), mit einer axialen Erstreckung c der vierten Profilblockreihe (21), mit einer axialen Erstreckung g der fünften Profilblockreihe (30), mit einer axialen Erstreckung d der sechsten Profilblockreihe (22), mit einer axialen Erstreckung e der siebten Profilblockreihe (24),

wobei das Maß der axialen Erstreckung a, b, f, c, g, d und e gilt:

a, e erstrecken sich über 10 bis 35% von TW,

wobei b,f, c, g, d sich über eine axiale Breite von 6 bis 48% von TW erstrecken.

wobei insbesondere gilt:

$0,13*TW \leq a \leq 0,21*TW, 0,8*TW \leq b \leq 0,15*TW, 0,8*TW \leq f \leq 0,15*TW,$
$0,8*TW \leq c \leq 0,15*TW, 0,8*TW \leq g \leq 0,15*TW, 0,8*TW \leq d \leq 0,15*TW,$
$0,13*TW \leq e \leq 0,21*TW.$

11. Laufstreifenprofil gemäß den Merkmalen von einem der vorangegangenen Ansprüche,

wobei die benachbarten Profilblockreihen (19,20,31,21,30,22,24) jeweils durch über den gesamten Umfang des Fahrzeugluftreifens erstreckte Rillen von einander beabstandet sind.

12. Laufstreifenprofil gemäß den Merkmalen von Anspruch 11,

wobei die benachbarten Profilblockreihen (19,20,31,21,30,22,24) jeweils durch über den gesamten Umfang des Fahrzeugluftreifens erstreckte Umfangsrillen von einander axial beabstandet sind.

13. Laufstreifenprofil gemäß den Merkmalen von einem der Ansprüche 1,3 oder 9,

mit einer mittleren zentralen Profilblockreihe (21), durch die sich die Äquatorebene des Fahrzeugluftreifens erstreckt, wobei diese Profilblockreihe (21) die kleinste durchschnittliche Umfangssteifigkeit der Profilblockreihen des Fahrzeugluftreifens aufweist.

**Claims**

1. Tread profile - in particular winter tread profile

- of a pneumatic vehicle tyre, with a number of rows of profile blocks axially adjacent to one another and made to extend over the entire circumference of the pneumatic vehicle tyre, each of the rows of profile blocks being formed by a number of profile block elements distributed over the circumference of the pneumatic vehicle tyre one behind the other in the circumferential direction and respectively spaced apart from one another by transverse channels,

the two axially outer rows of profile blocks, which respectively form a row of shoulder profile blocks, being formed with a greater average circumferential stiffness than the axially inner rows of profile blocks arranged between the two outer rows of profile blocks, **characterized**

**in that** it is formed with five rows of profile blocks (19, 20, 21, 22, 24) that are adjacent and made to extend in the circumferential direction over the pneumatic vehicle tyre, and in particular is formed symmetrically, with a first row of profile blocks (19) in the axial region of extent of the outer shoulder facing away from the vehicle when on the vehicle, with a second row of profile blocks (20), axially adjacent to the first row of profile blocks towards the inner shoulder facing towards the vehicle, with a third row of profile blocks (21), axially adjacent to the second row of profile blocks (20) towards the inner shoulder facing towards the vehicle, with a fourth row of profile blocks (22), axially adjacent to the third row of profile blocks (21) towards the inner shoulder facing towards the vehicle, and with a fifth row of profile blocks (24), axially adjacent to the fourth row of profile blocks (22) towards the inner shoulder facing towards the vehicle and formed in the axial region of extent of the inner shoulder facing towards the vehicle when on the vehicle,

the second row of profile blocks (20) being formed with an average circumferential stiffness which is 0.7 to 0.8 the average circumferential stiffness of the first row of profile blocks (19),

the third row of profile blocks (21) being formed with an average circumferential stiffness which is 0.6 to 0.7 the average circumferential stiffness of the first row of profile blocks (19),

the fourth row of profile blocks (22) being formed with an average circumferential stiffness which is 0.7 to 0.8 the average circumferential stiffness of the first row of profile blocks (19), and

the fifth row of profile blocks (24) being formed with an average circumferential stiffness which is 0.9 to 1.0 the average circumferential stiffness of the first row of profile blocks (19).

2. Tread profile according to the features of Claim 1, with an axial extent a of the first row of profile blocks (19) within the axial extent TW of the contact area of the tyre, with an axial extent b of the second row of profile blocks (20), with an axial extent c of the third row of profile blocks (21), with an axial extent d of the fourth row of profile blocks (22) and with an axial extent e of the fifth row of profile blocks (23) within the axial extent TW of the contact area of the tyre, the following applying for the degree of the axial extents a, b, c, d and e:

$0.22*TW$ a $\leq 0.25*TW$, $0.11*TW \leq b \leq 0.15*TW$, $0.1*TW \leq c \leq 0.14*TW$, $0.11*TW \leq d \leq 0.15*TW$, $0.18*TW \leq e \leq 0.22*TW$.

3. Tread profile - in particular winter tread profile

- of a pneumatic vehicle tyre, with a number of rows of profile blocks axially adjacent to one another and made to extend over the entire circumference of the pneumatic vehicle tyre, each of the rows of profile blocks being formed by a number of profile block elements distributed over the circumference of the pneumatic vehicle tyre one behind the other in the circumferential direction and respectively spaced apart from one another by transverse channels,

the two axially outer rows of profile blocks, which respectively form a row of shoulder profile blocks, being formed with a greater average circumferential stiffness than the axially inner rows of profile blocks arranged between the two outer rows of profile blocks, **characterized in that** it is formed asymmetrically and with five rows of profile blocks (19, 20, 21, 22, 24) that are adjacent and made to extend in the circumferential direction over the pneumatic vehicle tyre, with a first row of profile blocks (19) in the axial region of extent of the outer shoulder facing away from the vehicle when on the vehicle, with a second row of profile blocks (20), axially adjacent to the first row of profile blocks (19) towards the inner shoulder facing towards the vehicle, with a third row of profile blocks (21), axially adjacent to the second row of profile blocks (20) towards the inner shoulder facing towards the vehicle, with a fourth row of profile blocks (22), axially adjacent to the third row of profile blocks (21) towards the inner shoulder facing towards the vehicle, and with a fifth row of profile blocks (24), axially adjacent to the fourth row of profile blocks (22) towards the inner shoulder facing towards the vehicle and formed in the axial region of extent of the inner shoulder facing towards the vehicle when on the vehicle, the second row of profile blocks (20) being formed with an average circumferential stiffness which is 0.7 to 0.8 the average circumferential stiffness of the first row of profile blocks (19),

the third row of profile blocks (21) being formed with an average circumferential stiffness which is 0.6 to 0.7 the average circumferential stiffness of the first row of profile blocks (19),

the fourth row of profile blocks (22) being formed with an average circumferential stiffness which is 0.65 to 0.75 the average circumferential stiffness of the first row of profile blocks (19), and

the fifth row of profile blocks (24) being formed with an average circumferential stiffness which is 0.85 to 0.95 the average circumferential stiffness of the first row of profile blocks (19).

4. Tread profile according to the features of Claim 3, with an axial extent a of the first row of profile blocks (19) within the axial extent TW of the contact area of the tyre, with an axial extent b of the second row of profile blocks (20), with an axial extent c of the third row of profile blocks (21), with an axial extent d of the fourth row of profile blocks (22) and with an axial extent e of the fifth row of profile blocks (23) within the axial extent TW of the contact area of the tyre, the following applying for the degree of the axial extents a, b, c, d and e:

$0.22*TW \leq a \leq 0.25*TW$, $0.11*TW \leq b \leq 0.15*TW$, $0.1*TW \leq c \leq 0.14*TW$, $0.11*TW \leq d \leq 0.15*TW$, $0.18*TW \leq$

e ≤ 0.25*TW.

5. Tread profile - in particular winter tread profile

- of a pneumatic vehicle tyre, with a number of rows of profile blocks axially adjacent to one another and made to extend over the entire circumference of the pneumatic vehicle tyre, each of the rows of profile blocks being formed by a number of profile block elements distributed over the circumference of the pneumatic vehicle tyre one behind the other in the circumferential direction and respectively spaced apart from one another by transverse channels,

the two axially outer rows of profile blocks, which respectively form a row of shoulder profile blocks, being formed with a greater average circumferential stiffness than the axially inner rows of profile blocks arranged between the two outer rows of profile blocks, **characterized**

**in that** it is formed with four rows of profile blocks (19, 20, 22, 24) that are adjacent and made to extend in the circumferential direction over the pneumatic vehicle tyre, with the first row of profile blocks (19) in the axial region of extent of the outer shoulder facing away from the vehicle when on the vehicle, with a second row of profile blocks (20), axially adjacent to the first row of profile blocks (19) towards the inner shoulder facing towards the vehicle, with a third row of profile blocks (22), axially adjacent to the second row of profile blocks (20) towards the inner shoulder facing towards the vehicle, and with a fourth row of profile blocks (24), axially adjacent to the third row of profile blocks (22) towards the inner shoulder facing towards the vehicle,

the second row of profile blocks (20) being formed with an average circumferential stiffness which is 0.7 to 0.8 the average circumferential stiffness of the first row of profile blocks (19),

the third row of profile blocks (22) being formed with an average circumferential stiffness which is 0.65 to 0.8 the average circumferential stiffness of the first row of profile blocks (19), and

the fourth row of profile blocks (24) being formed with an average circumferential stiffness which is 0.9 to 1.0 the average circumferential stiffness of the first row of profile blocks (19).

6. Tread profile according to the features of Claim 5, with an axial extent a of the first row of profile blocks (19) within the axial extent TW of the contact area of the tyre, with an axial extent b of the second row of profile blocks (20), with an axial extent d of the third row of profile blocks (22) and with an axial extent e of the fourth row of profile blocks (24), the following applying for the degree of the axial extents a, b, d and e:

a and e extend over 15 to 40% of TW,
b and d extending in widths over 10-70% of TW,
where the following applies in particular:

0.17*TW ≤ a ≤ 0.26*TW,
0.12*TW ≤ b ≤ 0.34*TW, 0.12*TW ≤ d ≤ 0.34*TW,
0.17*TW ≤ e ≤ 0.26*TW.

7. Tread profile - in particular winter tread profile

- of a pneumatic vehicle tyre, with a number of rows of profile blocks axially adjacent to one another and made to extend over the entire circumference of the pneumatic vehicle tyre, each of the rows of profile blocks being formed by a number of profile block elements distributed over the circumference of the pneumatic vehicle tyre one behind the other in the circumferential direction and respectively spaced apart from one another by transverse channels,

the two axially outer rows of profile blocks, which respectively form a row of shoulder profile blocks, being formed with a greater average circumferential stiffness than the axially inner rows of profile blocks arranged between the two outer rows of profile blocks, **characterized**

**in that** it is formed with six rows of profile blocks (19, 20, 21, 30, 22, 24) that are adjacent and made to extend in the circumferential direction over the pneumatic vehicle tyre, with the first row of profile blocks (19) in the axial region of extent of the outer shoulder facing away from the vehicle when on the vehicle, with a second row of profile blocks (20), axially adjacent to the first row of profile blocks (19) towards the inner shoulder facing towards the vehicle, with a third row of profile blocks (21), axially adjacent to the second row of profile blocks (20) towards the inner shoulder facing towards the vehicle, with a fourth row of profile blocks (30), axially adjacent to the third row of profile blocks (21) towards the inner shoulder facing towards the vehicle, with a fifth row of profile blocks (22), axially adjacent to the fourth row of profile blocks (30) towards the inner shoulder facing towards the vehicle, and with a sixth row of profile blocks (24) axially adjacent to the fifth row of profile blocks (22) towards the inner shoulder facing towards the vehicle,

the second row of profile blocks (20) being formed with an average circumferential stiffness which is 0.7 to 0.8 the average circumferential stiffness of the first row of profile blocks (19),

the third row of profile blocks (21) being formed with an average circumferential stiffness which is 0.65 to 0.75 the average circumferential stiffness of the first row of profile blocks (19),

the fourth row of profile blocks (30) being formed with an average circumferential stiffness which is 0.6 to 0.7 the average circumferential stiffness of the first row of profile blocks (19),

the fifth row of profile blocks (22) being formed with an average circumferential stiffness which is 0.7 to 0.8 the average circumferential stiffness of the first row of profile blocks (19), and

the sixth row of profile blocks (24) being formed with an average circumferential stiffness which is 0.85 to 1.0 the average circumferential stiffness of the first row of profile blocks (19).

8. Tread profile according to the features of Claim 7, with an axial extent a of the first row of profile blocks (19) within the axial extent of the contact area of the tyre TW, with an axial extent b of the second row of profile blocks (20), with an axial extent c of the third row of profile blocks (21), with an axial extent f of the fourth row of profile blocks (30), with an axial extent d of the fifth row of profile blocks (22) and with an axial extent e of the sixth row of profile blocks (24),

the following applying for the degree of the axial extents a, b, c, f, d and e:

a and f extend over 10 to 35% of TW, b, c, d and e extending over an axial width of 6 to 62% of TW,

where the following applies in particular:

$0.15*TW \ a \leq 0.23*TW$, $0.8_*TW \leq b \leq 0.15*TW$, $0.8*TW \leq c \leq 0.15*TW$, $0.8*TW \leq f \leq 0.15*TW$, $0.8*TW \leq d \leq 0.15*TW$, $0.15*TW \leq e \leq 0.23*TW$.

9. Tread profile - in particular winter tread profile

- of a pneumatic vehicle tyre, with a number of rows of profile blocks axially adjacent to one another and made to extend over the entire circumference of the pneumatic vehicle tyre, each of the rows of profile blocks being formed by a number of profile block elements distributed over the circumference of the pneumatic vehicle tyre one behind the other in the circumferential direction and respectively spaced apart from one another by transverse channels,

the two axially outer rows of profile blocks, which respectively form a row of shoulder profile blocks, being formed with a greater average circumferential stiffness than the axially inner rows of profile blocks arranged between the two outer rows of profile blocks, **characterized**

**in that** it is formed with seven rows of profile blocks (19, 20, 31, 21, 30, 22, 24) that are adjacent and made to extend in the circumferential direction over the pneumatic vehicle tyre, with the first row of profile blocks (19) in the axial region of extent of the outer shoulder facing away from the vehicle when on the vehicle, with a second row of profile blocks (20), axially adjacent to the first row of profile blocks (19) towards the inner shoulder facing towards the vehicle, with a third row of profile blocks (31), axially adjacent to the second row of profile blocks (20) towards the inner shoulder facing towards the vehicle, with a fourth row of profile blocks (21), axially adjacent to the third row of profile blocks (31) towards the inner shoulder facing towards the vehicle, with a fifth row of profile blocks (30), axially adjacent to the fourth row of profile blocks (21) towards the inner shoulder facing towards the vehicle, with a sixth row of profile blocks (22) axially adjacent to the fifth row of profile blocks (30) towards the inner shoulder facing towards the vehicle, and with a seventh row of profile blocks (24) axially adjacent to the sixth row of profile blocks (22) towards the inner shoulder facing towards the vehicle,

the second row of profile blocks (20) being formed with an average circumferential stiffness which is 0.8 to 0.9 the average circumferential stiffness of the first row of profile blocks (19),

the third row of profile blocks (31) being formed with an average circumferential stiffness which is 0.7 to 0.8 the average circumferential stiffness of the first row of profile blocks (19),

the fourth row of profile blocks (21) being formed with an average circumferential stiffness which is 0.6 to 0.7 the average circumferential stiffness of the first row of profile blocks (19),

the fifth row of profile blocks (30) being formed with an average circumferential stiffness which is 0.65 to 0.8 the average circumferential stiffness of the first row of profile blocks (19),

the sixth row of profile blocks (22) being formed with an average circumferential stiffness which is 0.75 to 0.9 the average circumferential stiffness of the first row of profile blocks (19), and

the seventh row of profile blocks (24) being formed with an average circumferential stiffness which is 0.9 to 1.0 the average circumferential stiffness of the first row of profile blocks (19).

10. Tread profile according to the features of Claim 9, with an axial extent a of the first row of profile blocks (19) within the axial extent TW of the contact area of the tyre, with an axial extent b of the second row of profile blocks (20), with an axial extent f of the third row of profile blocks (31), with an axial extent c of the fourth row of profile blocks (21), with an axial extent g of the fifth row of profile blocks (30), with an axial extent d of the sixth row of profile blocks (22) and with an axial extent e of the seventh row of profile blocks (24), the following applying for the degree of the axial extents a, b, f, c, g, d and e:

a and e extend over 10 to 35% of TW, b, f, c, g and d extending over an axial width of 6 to 48% of TW, where the following applies in particular:

$0.13*TW \leq a \leq 0.21*TW$, $0.8*TW \leq b \leq 0.15*TW$, $0.8*TW \leq f \leq 0.15*TW$, $0.8*TW \leq c \leq 0.15*TW$, $0.8*TW \leq g \leq 0.15*TW$, $0.8*TW \leq d \leq 0.15*TW$, $0.13*TW \leq e \leq 0.21*TW$.

11. Tread profile according to the features of one of the preceding claims, the adjacent rows of profile blocks (19, 20, 31, 21, 30, 22, 24) being respectively spaced apart from one another by channels made to extend over the entire circumference of the pneumatic vehicle tyre.

12. Tread profile according to the features of Claim 11, the adjacent rows of profile blocks (19, 20, 31, 21, 30, 22, 24) being respectively spaced apart from one another axially by circumferential channels made to extend over the entire circumference of the pneumatic vehicle tyre.

13. Tread profile according to the features of one of Claims 1, 3 or 9, with a middle, central row of profile blocks (21), through which the equatorial plane of the pneumatic vehicle tyre extends, this row of profile blocks (21) having the smallest average circumferential stiffness of the rows of profile blocks of the pneumatic vehicle tyre.

**Revendications**

1. Profil de bande de roulement de bandage pneumatique pour roue de véhicule, en particulier profil de bande de roulement pour conditions hivernales, présentant plusieurs rangées de blocs profilés mutuellement voisines dans la direction axiale et s'étendant sur toute la périphérie du bandage pneumatique pour roue de véhicule, chacune des rangées de blocs profilés étant formée de plusieurs éléments de bloc profilé répartis les uns derrière les autres dans la direction périphérique sur la périphérie du bandage pneumatique pour roue de véhicule et maintenus à distance les uns des autres par des sillons transversaux, les deux rangées de blocs profilés situées axialement à l'extérieur et formant chacune une rangée de blocs profilés d'épaulement présentant une rigidité périphérique moyenne plus élevée que les rangées de blocs profilés disposées axialement à l'intérieur entre les deux rangées extérieures de blocs profilés, **caractérisé en ce que** le profil de bande de roulement est formé de cinq rangées voisines (19, 20, 21, 22, 24) de blocs profilés qui s'étendent en particulier de manière symétrique dans la direction périphérique du bandage pneumatique pour roue de véhicule, avec une première rangée (19) de blocs profilés dans la plage d'extension axiale de l'épaulement extérieur non tourné vers le véhicule lorsque le bandage de roue est monté sur le véhicule, avec une deuxième rangée (20) de blocs profilés axialement voisine de la première rangée de blocs profilés en direction de l'épaulement intérieur tourné vers le véhicule, avec une troisième rangée (21) de blocs profilés axialement voisine de la deuxième rangée (20) de blocs profilés en direction de l'épaulement intérieur tourné vers le véhicule, avec une quatrième rangée (22) de blocs profilés axialement voisine de la troisième rangée (21) de blocs profilés en direction de l'épaulement intérieur tourné vers le véhicule et avec une cinquième rangée (24) de blocs profilés axialement voisine de la quatrième rangée (22) de blocs profilés en direction de l'épaulement intérieur tourné vers le véhicule et formée dans la partie d'extension axiale de l'épaulement intérieur tourné vers le véhicule lorsque le bandage de roue est monté sur le véhicule, la rigidité périphérique moyenne de la deuxième rangée (20) de blocs profilés représentant de 0,7 à 0,8 fois la rigidité périphérique moyenne de la première rangée (19) de blocs profilés, la rigidité périphérique moyenne de la troisième rangée (21) de blocs profilés représentant de 0,6 à 0,7 fois la rigidité périphérique moyenne de la première rangée (19) de blocs profilés, la rigidité périphérique moyenne de la quatrième rangée (22) de blocs profilés représentant de 0,7 à 0,8 fois la rigidité périphérique moyenne de la première rangée (19) de blocs profilés et la rigidité périphérique moyenne de la cinquième rangée (24) de blocs profilés représentant de 0,9 à 1,0 fois la rigidité périphérique moyenne de la première rangée (19) de blocs profilés.

**2.** Profil de bande de roulement selon les caractéristiques de la revendication 1, avec une extension axiale a de la première rangée (19) de blocs profilés à l'intérieur de l'extension axiale TW de la surface d'appui au sol du bandage de roue, une extension axiale b de la deuxième rangée (20) de blocs profilés, une extension axiale c de la troisième rangée (21) de blocs profilés, une extension axiale d de la quatrième rangée (22) de blocs profilés et une extension axiale e de la cinquième rangée (23) de blocs profilés à l'intérieur de l'extension axiale TW de la surface d'appui au sol du bandage de roue, les relations suivantes étant satisfaites pour les dimensions des extensions axiales a, b, c, d et e :

$$0,22*RW \leq a \leq 0,25*TW,$$
$$0,11*TW \leq b \leq 0,15*TW,$$
$$0,1*TW \leq c \leq 0,14*TW,$$
$$0,11*TW \leq d \leq 0,15*TW \text{ et}$$
$$0,18*TW \leq e \leq 0,22*TW.$$

**3.** Profil de bande de roulement de bandage pneumatique pour roue de véhicule, en particulier profil de bande de roulement pour conditions hivernales, présentant plusieurs rangées de blocs profilés mutuellement voisines dans la direction axiale et s'étendant sur toute la périphérie du bandage pneumatique pour roue de véhicule, chacune des rangées de blocs profilés étant formée de plusieurs éléments de bloc profilé répartis les uns derrière les autres dans la direction périphérique sur la périphérie du bandage pneumatique pour roue de véhicule et maintenus à distance les uns des autres par des sillons transversaux, les deux rangées de blocs profilés situées axialement à l'extérieur et formant chacune une rangée de blocs profilés d'épaulement présentant une rigidité périphérique moyenne plus élevée que les rangées de blocs profilés disposées axialement à l'intérieur entre les deux rangées extérieures de blocs profilés, **caractérisé en ce que** le profil de bande de roulement est asymétrique et formé de cinq rangées voisines (19, 20, 21, 22, 24) de blocs profilés qui s'étendent sur le bandage pneumatique pour roue de véhicule, avec une première rangée (19) de blocs profilés dans la plage d'extension axiale de l'épaulement extérieur non tourné vers le véhicule lorsque le bandage de roue est monté sur le véhicule, avec une deuxième rangée (20) de blocs profilés axialement voisine de la première rangée (19) de blocs profilés en direction de l'épaulement intérieur tourné vers le véhicule, avec une troisième rangée (21) de blocs profilés axialement voisine de la deuxième rangée (20) de blocs profilés en direction de l'épaulement intérieur tourné vers le véhicule, avec une quatrième rangée (22) de blocs profilés axialement voisine de la troisième rangée (21) de blocs profilés en direction de l'épaulement intérieur tourné vers le véhicule et avec une cinquième rangée (24) de blocs profilés axialement voisine de la quatrième rangée (22) de blocs profilés en direction de l'épaulement intérieur tourné vers le véhicule et formée dans la partie d'extension axiale de l'épaulement intérieur tourné vers le véhicule lorsque le bandage de roue est monté sur le véhicule, la rigidité périphérique moyenne de la deuxième rangée (20) de blocs profilés représentant de 0,7 à 0,8 fois la rigidité périphérique moyenne de la première rangée (19) de blocs profilés, la rigidité périphérique moyenne de la troisième rangée (21) de blocs profilés représentant de 0,6 à 0,7 fois la rigidité périphérique moyenne de la première rangée (19) de blocs profilés, la rigidité périphérique moyenne de la quatrième rangée (22) de blocs profilés représentant de 0,65 à 0,75 fois la rigidité périphérique moyenne de la première rangée (19) de blocs profilés et la rigidité périphérique moyenne de la cinquième rangée (24) de blocs profilés représentant de 0,85 à 0,95 fois la rigidité périphérique moyenne de la première rangée (19) de blocs profilés.

**4.** Profil de bande de roulement selon les caractéristiques de la revendication 3, avec une extension axiale a de la première rangée (19) de blocs profilés à l'intérieur de l'extension axiale TW de la surface d'appui au sol du bandage de roue, une extension axiale b de la deuxième rangée (20) de blocs profilés, une extension axiale c de la troisième rangée (21) de blocs profilés, une extension axiale d de la quatrième rangée (22) de blocs profilés et une extension axiale e de la cinquième rangée (23) de blocs profilés à l'intérieur de l'extension axiale TW de la surface d'appui au sol du bandage de roue, les relations suivantes étant satisfaites pour les dimensions des extensions axiales a, b, c, d et e :

$$0,22*RW \leq a \leq 0,25*TW,$$
$$0,1*TW \leq b \leq 0,15*TW,$$
$$0,1*TW \leq c \leq 0,14*TW,$$
$$0,11*TW \leq d \leq 0,15*TW \text{ et}$$
$$0,18*TW \leq e \leq 0,25*TW.$$

**5.** Profil de bande de roulement de bandage pneumatique pour roue de véhicule, en particulier profil de bande de roulement pour conditions hivernales, présentant plusieurs rangées de blocs profilés mutuellement voisines dans la direction axiale et s'étendant sur toute la périphérie du bandage pneumatique pour roue de véhicule,

chacune des rangées de blocs profilés étant formée de plusieurs éléments de bloc profilé répartis les uns derrière les autres dans la direction périphérique sur la périphérie du bandage pneumatique pour roue de véhicule et maintenus à distance les uns des autres par des sillons transversaux,

les deux rangées de blocs profilés situées axialement à l'extérieur et formant chacune une rangée de blocs profilés d'épaulement présentant une rigidité périphérique moyenne plus élevée que les rangées de blocs profilés disposées axialement à l'intérieur entre les deux rangées extérieures de blocs profilés, **caractérisé en ce que**

le profil de bande de roulement est formé de quatre rangées voisines (19, 20, 22, 24) de blocs profilés qui s'étendent en particulier de manière symétrique dans la direction périphérique du bandage pneumatique pour roue de véhicule,

avec une première rangée (19) de blocs profilés dans la plage d'extension axiale de l'épaulement extérieur non tourné vers le véhicule lorsque le bandage de roue est monté sur le véhicule,

avec une deuxième rangée (20) de blocs profilés axialement voisine de la première rangée (19) de blocs profilés en direction de l'épaulement intérieur tourné vers le véhicule,

avec une troisième rangée (22) de blocs profilés axialement voisine de la deuxième rangée (20) de blocs profilés en direction de l'épaulement intérieur tourné vers le véhicule, et

avec une quatrième rangée (24) de blocs profilés axialement voisine de la troisième rangée (22) de blocs profilés en direction de l'épaulement intérieur tourné vers le véhicule,

la rigidité périphérique moyenne de la deuxième rangée (20) de blocs profilés représentant de 0,7 à 0,8 fois la rigidité périphérique moyenne de la première rangée (19) de blocs,

la rigidité périphérique moyenne de la troisième rangée (22) de blocs profilés représentant de 0,65 à 0,8 fois la rigidité périphérique moyenne de la première rangée (19) de blocs profilés et

la rigidité périphérique moyenne de la quatrième rangée (24) de blocs profilés représentant de 0,9 à 1,0 fois la rigidité périphérique moyenne de la première rangée (19) de blocs profilés.

**6.** Profil de bande de roulement selon les caractéristiques de la revendication 5, avec une extension axiale a de la première rangée (19) de blocs profilés à l'intérieur de l'extension axiale TW de la surface d'appui au sol du bandage de roue, une extension axiale b de la deuxième rangée (20) de blocs profilés, une extension axiale d de la troisième rangée (22) de blocs profilés et une extension axiale e de la quatrième rangée (24) de blocs profilés à l'intérieur de l'extension axiale TW de la surface d'appui au sol du bandage de roue, les relations suivantes étant satisfaites pour les dimensions des extensions axiales a, b, d et e :

a, e s'étendent sur 15 à 40 % de TW,

b et d s'étendent sur une largeur qui correspond à 10-70 % de TW et en particulier :

$0,17*TW \leq a \leq 0,26*TW,$
$0,12*TW \leq b \leq 0,34*TW,$
$0,12*TW\ d \leq 0,34*TW\ et$
$0,17*TW \leq e \leq 0,26*TW.$

**7.** Profil de bande de roulement de bandage pneumatique pour roue de véhicule, en particulier profil de bande de roulement pour conditions hivernales, présentant plusieurs rangées de blocs profilés mutuellement voisines dans la direction axiale et s'étendant sur toute la périphérie du bandage pneumatique pour roue de véhicule,

chacune des rangées de blocs profilés étant formée de plusieurs éléments de bloc profilé répartis les uns derrière les autres dans la direction périphérique sur la périphérie du bandage pneumatique pour roue de véhicule et maintenus à distance les uns des autres par des sillons transversaux,

les deux rangées de blocs profilés situées axialement à l'extérieur et formant chacune une rangée de blocs profilés d'épaulement présentant une rigidité périphérique moyenne plus élevée que les rangées de blocs profilés disposées axialement à l'intérieur entre les deux rangées extérieures de blocs profilés, **caractérisé en ce que**

le profil de bande de roulement est formé de six rangées voisines (19, 20, 21, 30, 22, 24) de blocs profilés qui s'étendent dans la direction périphérique du bandage pneumatique pour roue de véhicule,

avec une première rangée (19) de blocs profilés dans la plage d'extension axiale de l'épaulement extérieur non tourné vers le véhicule lorsque le bandage de roue est monté sur le véhicule,

avec une deuxième rangée (20) de blocs profilés axialement voisine de la première rangée (19) de blocs profilés en direction de l'épaulement intérieur tourné vers le véhicule,

avec une troisième rangée (21) de blocs profilés axialement voisine de la deuxième rangée (20) de blocs profilés en direction de l'épaulement intérieur tourné vers le véhicule,

avec une quatrième rangée (30) de blocs profilés axialement voisine de la troisième rangée (21) de blocs profilés en direction de l'épaulement intérieur tourné vers le véhicule,

avec une cinquième rangée (22) de blocs profilés axialement voisine de la quatrième rangée (30) de blocs profilés en direction de l'épaulement intérieur tourné vers le véhicule et

avec une sixième rangée (24) de blocs profilés axialement voisine de la cinquième rangée (22) de blocs profilés en direction de l'épaulement intérieur tourné vers le véhicule,

la rigidité périphérique moyenne de la deuxième rangée (20) de blocs profilés représentant de 0,7 à 0,8 fois la rigidité périphérique moyenne de la première rangée (19) de blocs profilés,

la rigidité périphérique moyenne de la troisième rangée (21) de blocs profilés représentant de 0,65 à 0,75 fois la rigidité périphérique moyenne de la première rangée (19) de blocs profilés,

la rigidité périphérique moyenne de la quatrième rangée (30) de blocs profilés représentant de 0,6 à 0,7 fois la rigidité périphérique moyenne de la première rangée (19) de blocs profilés,

la rigidité périphérique moyenne de la cinquième rangée (22) de blocs profilés représentant de 0,7 à 0,8 fois la rigidité périphérique moyenne de la première rangée (19) de blocs profilés et

la rigidité périphérique moyenne de la sixième rangée (24) de blocs profilés représentant de 0,85 à 1,0 fois la rigidité périphérique moyenne de la première rangée (19) de blocs profilés.

**8.** Profil de bande de roulement selon les caractéristiques de la revendication 7, avec une extension axiale a de la première rangée (19) de blocs profilés à l'intérieur de l'extension axiale TW de la surface d'appui au sol du bandage de roue, une extension axiale b de la deuxième rangée (20) de blocs profilés, une extension axiale c de la troisième rangée (21) de blocs profilés, une extension axiale f de la quatrième rangée (30) de blocs profilés, une extension axiale d de la cinquième rangée (22) de blocs profilés et une extension axiale e de la sixième rangée (24) de blocs profilés, les relations suivantes étant satisfaites pour les dimensions des extensions axiales a, b, c, f, d et e :

a, f s'étendent sur 10 à 35 % de TW,
b, c, d, e s'étendent sur une largeur axiale de 6 à 62 % de TW et en particulier :

$$0,15*TW \leq a \leq 0,23*TW,$$
$$0,8*TW \leq b \leq 0,15*TW,$$
$$0,8*TW \leq c \leq 0,15*TW,$$
$$0,8*TW \leq f \leq 0,15*TW,$$
$$0,8*TW \leq d \leq 0,15*TW \text{ et}$$
$$0,15*TW \leq e \leq 0,23*TW.$$

**9.** Profil de bande de roulement de bandage pneumatique pour roue de véhicule, en particulier profil de bande de roulement pour conditions hivernales, présentant plusieurs rangées de blocs profilés mutuellement voisines dans la direction axiale et s'étendant sur toute la périphérie du bandage pneumatique pour roue de véhicule,

chacune des rangées de blocs profilés étant formée de plusieurs éléments de bloc profilé répartis les uns derrière les autres dans la direction périphérique sur la périphérie du bandage pneumatique pour roue de véhicule et maintenus à distance les uns des autres par des sillons transversaux,

les deux rangées de blocs profilés situées axialement à l'extérieur et formant chacune une rangée de blocs profilés d'épaulement présentant une rigidité périphérique moyenne plus élevée que les rangées de blocs profilés disposées axialement à l'intérieur entre les deux rangées extérieures de blocs profilés, **caractérisé en ce que**

le profil de bande de roulement est formé de sept rangées voisines (19, 20, 31, 21, 30, 22, 24) de blocs profilés qui s'étendent dans la direction périphérique du bandage pneumatique pour roue de véhicule,

avec une première rangée (19) de blocs profilés dans la plage d'extension axiale de l'épaulement extérieur non tourné vers le véhicule lorsque le bandage de roue est monté sur le véhicule,

avec une deuxième rangée (20) de blocs profilés axialement voisine de la première rangée (19) de blocs profilés en direction de l'épaulement intérieur tourné vers le véhicule,

avec une troisième rangée (31) de blocs profilés axialement voisine de la deuxième rangée (20) de blocs profilés en direction de l'épaulement intérieur tourné vers le véhicule,

avec une quatrième rangée (21) de blocs profilés axialement voisine de la troisième rangée (31) de blocs profilés en direction de l'épaulement intérieur tourné vers le véhicule,

avec une cinquième rangée (30) de blocs profilés axialement voisine de la quatrième rangée (21) de blocs profilés en direction de l'épaulement intérieur tourné vers le véhicule,

avec une sixième rangée (22) de blocs profilés axialement voisine de la cinquième rangée (30) de blocs profilés en direction de l'épaulement intérieur tourné vers le véhicule et

avec une septième rangée (24) de blocs profilés axialement voisine de la sixième rangée (22) de blocs profilés en direction de l'épaulement intérieur tourné vers le véhicule,

la rigidité périphérique moyenne de la deuxième rangée (20) de blocs profilés représentant de 0,8 à 0,9 fois la rigidité périphérique moyenne de la première rangée (19) de blocs profilés,

la rigidité périphérique moyenne de la troisième rangée (31) de blocs profilés représentant de 0,7 à 0,8 fois la rigidité périphérique moyenne de la première rangée (19) de blocs profilés,

la rigidité périphérique moyenne de la quatrième rangée (21) de blocs profilés représentant de 0,6 à 0,7 fois la rigidité périphérique moyenne de la première rangée (19) de blocs profilés,

la rigidité périphérique moyenne de la cinquième rangée (30) de blocs profilés représentant de 0,65 à 0,8 fois la rigidité périphérique moyenne de la première rangée (19) de blocs profilés,

la rigidité périphérique moyenne de la sixième rangée (22) de blocs profilés représentant de 0,75 à 0,9 fois la rigidité périphérique moyenne de la première rangée (19) de blocs profilés et

la rigidité périphérique moyenne de la septième rangée (24) de blocs profilés représentant de 0,9 à 1,0 fois la rigidité périphérique moyenne de la première rangée (19) de blocs profilés.

10. Profil de bande de roulement selon les caractéristiques de la revendication 9, avec une extension axiale a de la première rangée (19) de blocs profilés à l'intérieur de l'extension axiale TW de la surface d'appui au sol du bandage de roue, une extension axiale b de la deuxième rangée (20) de blocs profilés, une extension axiale f de la troisième rangée (31) de blocs profilés, une extension axiale c de la quatrième rangée (21) de blocs profilés, une extension axiale g de la cinquième rangée (30) de blocs profilés, une extension axiale d de la sixième rangée (22) de blocs profilés et une extension axiale e de la septième rangée (24) de blocs profilés, les relations suivantes étant satisfaites pour les dimensions des extensions axiales a, b, f, c, g, d et e :

a, e s'étendent sur 10 à 35 % de TW,

b, f, c, g, d s'étendent sur une largeur axiale de 6 à 48 % de TW et en particulier :

$$0,13*TW \leq a \leq 0,21*TW,$$
$$0,8*TW \leq b \leq 0,15*TW,$$
$$0,8*TW \leq f \leq 0,15*TW,$$
$$0,8*TW \leq c \leq 0,15*TW,$$
$$0,8*TW \leq g \leq 0,15*TW,$$
$$0,8*TW \leq d \leq 0,15*TW \text{ et}$$
$$0,13*TW \leq e \leq 0,21*TW.$$

11. Profil de bande de roulement selon les caractéristiques de l'une des revendications précédentes, dans lequel les rangées voisines (19, 20, 31, 21, 30, 22, 24) de blocs profilés sont toutes maintenues à distance les unes des autres par des sillons qui s'étendent sur toute la périphérie du bandage pneumatique pour roue de véhicule.

12. Profil de bande de roulement selon les caractéristiques de la revendication 11, dans lequel les rangées (19, 20, 31, 21, 30, 22, 24) voisines de blocs profilés sont toutes maintenues à distance mutuelle dans la direction axiale par des sillons périphériques qui s'étendent sur toute la périphérie du bandage pneumatique pour roue de véhicule.

13. Profil de bande de roulement selon les caractéristiques de l'une des revendications 1, 3 ou 9, et présentant une rangée centrale (21) de blocs profilés dans laquelle s'étend le plan équatorial du bandage pneumatique pour roue de véhicule, cette rangée (21) de blocs profilés présentant la plus petite rigidité périphérique moyenne des rangées de blocs profilés du bandage pneumatique pour roue de véhicule.

# FIG. 1

EP 1 795 372 B1

FIG. 2

19  12  20  16  21  17  22  1  18  24  13

11

10

7  8  9  7  6

5  4  5  4  23  3  23  2  3  2

R  A

EP 1 795 372 B1

FIG. 3a

# FIG. 3b

S₁  S₂  S₃

t

35

EP 1 795 372 B1

FIG 4.

FIG. 5

FIG. 6

FIG.7

EP 1 795 372 B1

**IN DER BESCHREIBUNG AUFGEFÜHRTE DOKUMENTE**

**In der Beschreibung aufgeführte Patentdokumente**

- EP 0456949 A

**In der Beschreibung aufgeführte Nicht-Patentliteratur**

- Reifen- Fahrwerk - Fahrbahn. VDI-Berichte 1912, 25. Oktober 2005, 227ff